# EUROPEAN PATENT APPLICATION

(11) **EP 4 668 901 A1**
(43) Date of publication of application: **24.12.2025**
(21) Application number: 24755867.9
(22) Date of filing: 16.01.2024
(51) Int. Cl.: H04W 52/14

(54) **PHR REPORTING METHOD, POWER BACKOFF VALUE REPORTING METHOD AND APPARATUS, AND TERMINAL**

(30) Priority: 17.02.2023 CN 202310146756
(71) Applicant: Datang Mobile Communications Equipment Co., Ltd., Beijing 100085 (CN)
(72) Inventor: SONG, Lei, Beijing 100085 (CN); GAO, Qiubin, Beijing 100085 (CN); LUO, Yajuan, Beijing 100085 (CN); HUANG, Qiuping, Beijing 100085 (CN)
(74) Representative: Maiwald GmbH
(86) International application number: PCT/CN2024/072482
(87) International publication number: WO 2024/169492

(57) **Abstract**

The present disclosure provides a PHR reporting method, a power backoff value reporting method and device, and UE. The method includes: reporting, by UE, a PHR; where the PHR includes: N1 power headroom (PH) fields, and N2 maximum power (Pcmax) field(s), N1 is an integer greater than or equal to 2, and N2 is an integer greater than or equal to 1. Each PH field is used to indicate a power headroom of corresponding target transmission; the N2 Pcmax fields are used to indicate maximum transmission powers corresponding to different target transmissions or different first parameters.

## Description

### CROSS-REFERENCE TO RELATED APPLICATION

The present application is filed based on and claims the priority of Chinese Application No. 202310146756.6 filed on February 17, 2023, entitled "PHR reporting method, power backoff value reporting method, apparatus and terminal", the disclosure of which are incorporated in their entireties by reference herein.

### TECHNICAL FIELD

The present disclosure relates to the field of communication technologies, and in particular, to a PHR reporting method, a power backoff value reporting method, a device, and a terminal

### BACKGROUND

In the New Radio (NR) system, each terminal can be configured with multiple antenna panels. In previous versions, at one instance, the terminal can select only one panel for uplink transmission, such as transmission of Physical Uplink Shared Channel (PUSCH), Physical Uplink Control Channel (PUCCH) or Sounding Reference Signal (SRS). When performing power control, the network achieves power control over the corresponding transmission panel through power control on PUSCH, PUCCH, or SRS.

In the related art, power headroom (PH) reflects a difference between an estimated power and the nominal UE maximum transmit power (P_{CMAX,f,c}). When the power headroom (PH) satisfies a certain condition, a power headroom report (PHR) is triggered.

In case of simultaneous transmission of multiple panels, in addition to a total power limit of the terminal, each panel may also correspond to its own maximum power limit. A PH value calculated only based on the maximum power limit of the terminal may not reflect an actual transmit power headroom of the terminal.

On the one hand, in the related art, when the PH value is negative, it can reflect that the terminal has backed off a power control power value set by a base station (gNB) (that is, an estimated transmit power in the PH calculation), that is, the transmit power is backed off from thepower control power value set by the gNB to P_{CMAX,f,c}(i). In multi-panel transmission, if the control power value set by the gNB does not exceed the maximum power limit of a single panel, but a sum of power control power values set by the gNB of multiple PUSCHs exceeds the maximum power limit of the terminal, the terminal's transmit power also needs to be backed off. At this point, the PH value is positive, and the gNB cannot determine whether the terminal has backed off the power control power value set by the gNB through PHR reporting. Accordingly, the power control parameters set by the gNB cannot be correctly adjusted in subsequent scheduling.

### SUMMARY

An object of the present disclosure is to provide a PHR reporting method, a power backoff value reporting method, a device, and a terminal, which can solve the problem that the PHR reporting method or the power backoff value reporting method in the related art cannot adapt to scenarios involving multiple target transmissions or multiple first parameters configured.

In order to solve the above problem, one embodiment of the present disclosure provides a power headroom report (PHR) reporting method, including:
reporting, by a user equipment (UE), a PHR; wherein the PHR includes: N1 power headroom (PH) fields, and N2 maximum power (Pcmax) field(s), N1 is an integer greater than or equal to 2, and N2 is an integer greater than or equal to 1;
wherein each PH field is used to indicate a power headroom of corresponding target transmission; the N2 Pcmax fields are used to indicate maximum transmission powers corresponding to different target transmissions or different first parameters;
wherein the target transmission includes at least one of the following: physical uplink shared channel (PUSCH), or physical uplink control channel (PUCCH), or sounding reference signal (SRS);
the first parameter includes at least one of the following: sounding reference signal (SRS) resource set (SRS resource set), or transmission configuration indication (TCI) state, or related higher layer parameter of a control resource set (CORESET).

Optionally, when N2 is greater than or equal to 2 as well as N2 is equal to N1, each of the Pcmax fields is used to indicate maximum transmit powers corresponding to different target transmissions or different first parameters;
wherein the PH fields are associated with the Pcmax fields in a one-to-one manner; a PH value of each PH field is determined by a power value of the Pcmax field corresponding to the PH field.

Optionally, the method further includes:
determining an association relationship between the PH field and the Pcmax field according to a predefined association relationship; or,
determining an association relationship between the PH field and the Pcmax field according to the first parameter.

Optionally, the determining an association relationship between the PH field and the Pcmax field according to the first parameter, includes:
determining the association relationship between the PH field and the Pcmax field according to an association relationship between the PH field and the first parameter as well as an association relationship between the first parameter and the Pcmax field;
   or,
determining the association relationship between the PH field and the Pcmax field according to an association relationship between the PH field and the first parameter, an association relationship between the Pcmax field and the second parameter as well as an association relationship between the first parameter and the second parameter; wherein the second parameter includes: SRS resource set, or TCI state, or related higher layer parameter of CORESET.

Optionally, when N2 is greater than or equal to 2 and N2 is equal to N1, the N2 Pcmax fields include: one first Pcmax field and (N2-1) second Pcmax fields; the first Pcmax field is used to indicate a maximum transmit power of the UE, and each of the second Pcmax fields is used to indicate maximum transmit powers corresponding to different target transmissions or different first parameters;
the (N2-1) second Pcmax fields are associated with (N2-1) PH fields in a one-to-one manner, and a PH value of each PH field is determined by a power value of the second Pcmax field corresponding to the PH field and/or a power value of the first Pcmax field.

Optionally, when N2 is equal to 1, one Pcmax field is used to indicate a maximum transmit power of the UE;
the PH value of each PH field is determined by a power value of the Pcmax field and a power factor corresponding to the PH field.

Optionally, the power factor corresponding to the PH field is associated with the first parameter corresponding to the PH field;
or, the power factor is a predefined value;
or, the PHR carries the power factor.

Optionally, if the PHR carries the power factor, the method further includes:
in case that a change of the power factor is greater than a first threshold, triggering reporting of the PHR.

Optionally, when N2 is equal to 1, one Pcmax field is used to indicate a maximum transmit power corresponding to different target transmissions or different first parameters; the different target transmissions or different first parameters correspond to the same maximum transmit power;
the maximum transmit power indicated by the Pcmax field does not include a power backoff value.

Optionally, the PHR further includes: a maximum permissible exposure (MPE) field and a first information field indicating association between the MPE field and the PH field;
the PH value of the PH field associated with the MPE field is related to the value of the MPE field.

One embodiment of the present disclosure provides a power backoff value reporting method, including:
reporting, by a user equipment (UE), a media access control control element (MAC CE) or uplink control information (UCI), wherein the MAC CE or UCI carries a power backoff value caused by exceeding a maximum transmit power limit corresponding to a target transmission or a first parameter;
wherein the target transmission includes at least one of the following: a physical uplink shared channel (PUSCH), or a physical uplink control channel (PUCCH), or a sounding reference signal (SRS);
the first parameter includes at least one of the following: a sounding reference signal (SRS) resource set (SRS resource set), or a transmission configuration indication (TCI) state, or a related higher layer parameter of a control resource set CORESET.

Optionally, the MAC CE includes a first identification bit and a second information field;
the first identification bit is used to identify the target transmission or the first parameter where power backoff occurs;
the second information field is used to indicate a power backoff value caused by exceeding the maximum transmit power limit corresponding to the target transmission or the first parameter.

Optionally, the MAC CE includes:
multiple third information fields; wherein each third information field is used to indicate a power backoff value corresponding to a target transmission or a first parameter associated with the third information field.

Optionally, the MAC CE further includes at least one of the following:
at least one fourth information field, wherein the fourth information field is used to indicate whether the third information field reports a power backoff value;
at least one fifth information field, wherein the fifth information field is used to indicate that a maximum transmit power causing power backoff is a maximum transmit power of the UE, or is used to indicate that a maximum transmit power causing power backoff is a maximum transmit power corresponding to the target transmission or the first parameter.

Optionally, the MAC CE includes an MPE field, and the MPE field is used to carry the power backoff value.

Optionally, the MAC CE further includes:
a second identification bit used to indicate a cause for the power backoff report.

Optionally, the cause of the power backoff reporting indicated by the second identification includes at least one of the following:
reporting of the backoff value caused only by MPE requirements, not due to power limits;
reporting of the backoff value caused only by power limits, not due to MPE requirements;
reporting of the backoff value caused by power limit and MPE requirements;
reporting of the backoff value not due to MPE requirements and not due to power limits; which can also be used as a reserved bit.

Optionally, when the MPE field indicates that the power backoff value is a power backoff value caused by the maximum power limit and the MPE requirement, the power backoff value indicated by the MPE field includes at least one of the following:
power management maximum power backoff value P-MPR;
power backoff value L-MPR caused by exceeding the maximum transmit power limit;
a sum of P-MPR and L-MPR;
a maximum value of P-MPR and L-MPR.

Optionally, the UCI includes: a power backoff value for each PUSCH; wherein the method further includes:
according to a predefined rule, determining a corresponding relationship between each power backoff value carried by the UCI and the target transmission or the first parameter.

Optionally, the UCI includes: a first valid bit and a second valid bit;
the first valid bit is used to indicate a target transmission or a first parameter for power backoff; the second valid bit is used to indicate the power backoff value.

Optionally, the first valid bit indicates the target transmission or first parameter for power backoff by means of joint coding or bit mapping.

Optionally, the payload of the UCI is variable; and the method further includes:
determining the number of bits of the second valid bit according to the number of target transmissions or first parameters for power backoff indicated by the first valid bit.

One embodiment of the present disclosure provides a user equipment (UE), including: a memory, a transceiver, and a processor;
wherein the memory is used to store a computer program; the transceiver is used to send and receive data under control of the processor; and the processor is used to read the computer program in the memory and perform the following operations:
reporting a PHR; wherein the PHR includes: N1 power headroom (PH) fields, and N2 maximum power (Pcmax) field(s), N1 is an integer greater than or equal to 2, and N2 is an integer greater than or equal to 1;
wherein each PH field is used to indicate a power headroom of corresponding target transmission; the N2 Pcmax fields are used to indicate maximum transmission powers corresponding to different target transmissions or different first parameters;
wherein the target transmission includes at least one of the following: physical uplink shared channel (PUSCH), or physical uplink control channel (PUCCH), or sounding reference signal (SRS);
the first parameter includes at least one of the following: sounding reference signal (SRS) resource set (SRS resource set), or transmission configuration indication (TCI) state, or related higher layer parameter of a control resource set (CORESET).

Optionally, when N2 is greater than or equal to 2 as well as N2 is equal to N1, each of the Pcmax fields is used to indicate maximum transmit powers corresponding to different target transmissions or different first parameters;
wherein the PH fields are associated with the Pcmax fields in a one-to-one manner; a PH value of each PH field is determined by a power value of the Pcmax field corresponding to the PH field.

Optionally, the processor is used to read the computer program in the memory and perform the following operations:
determining an association relationship between the PH field and the Pcmax field according to a predefined association relationship; or,
determining an association relationship between the PH field and the Pcmax field according to the first parameter.

Optionally, the processor is used to read the computer program in the memory and perform the following operations:
determining the association relationship between the PH field and the Pcmax field according to an association relationship between the PH field and the first parameter as well as an association relationship between the first parameter and the Pcmax field;
   or,
determining the association relationship between the PH field and the Pcmax field according to an association relationship between the PH field and the first parameter, an association relationship between the Pcmax field and the second parameter as well as an association relationship between the first parameter and the second parameter; wherein the second parameter includes: SRS resource set, or TCI state, or related higher layer parameter of CORESET.

Optionally, when N2 is greater than or equal to 2 and N2 is equal to N1, the N2 Pcmax fields include: one first Pcmax field and (N2-1) second Pcmax fields; the first Pcmax field is used to indicate a maximum transmit power of the UE, and each of the second Pcmax fields is used to indicate maximum transmit powers corresponding to different target transmissions or different first parameters;
the (N2-1) second Pcmax fields are associated with (N2-1) PH fields in a one-to-one manner, and a PH value of each PH field is determined by a power value of the second Pcmax field corresponding to the PH field and/or a power value of the first Pcmax field.

Optionally, when N2 is equal to 1, one Pcmax field is used to indicate a maximum transmit power of the UE;
the PH value of each PH field is determined by a power value of the Pcmax field and a power factor corresponding to the PH field.

Optionally, the power factor corresponding to the PH field is associated with the first parameter corresponding to the PH field;
or, the power factor is a predefined value;
or, the PHR carries the power factor.

Optionally, if the PHR carries the power factor, the processor is used to read the computer program in the memory and perform the following operations:
in case that a change of the power factor is greater than a first threshold, triggering reporting of the PHR.

Optionally, when N2 is equal to 1, one Pcmax field is used to indicate a maximum transmit power corresponding to different target transmissions or different first parameters; the different target transmissions or different first parameters correspond to the same maximum transmit power;
the maximum transmit power indicated by the Pcmax field does not include a power backoff value.

Optionally, the PHR further includes: a maximum permissible exposure (MPE) field and a first information field indicating association between the MPE field and the PH field;
the PH value of the PH field associated with the MPE field is related to the value of the MPE field.

One embodiment of the present disclosure provides a power headroom report (PHR) reporting device, including:
a first reporting unit used to report a PHR; wherein the PHR includes: N1 power headroom (PH) fields, and N2 maximum power (Pcmax) field(s), N1 is an integer greater than or equal to 2, and N2 is an integer greater than or equal to 1;
wherein each PH field is used to indicate a power headroom of corresponding target transmission; the N2 Pcmax fields are used to indicate maximum transmission powers corresponding to different target transmissions or different first parameters;
wherein the target transmission includes at least one of the following: physical uplink shared channel (PUSCH), or physical uplink control channel (PUCCH), or sounding reference signal (SRS);
the first parameter includes at least one of the following: sounding reference signal (SRS) resource set (SRS resource set), or transmission configuration indication (TCI) state, or related higher layer parameter of a control resource set (CORESET).

One embodiment of the present disclosure provides a user equipment (UE), including: a memory, a transceiver, and a processor;
wherein the memory is used to store a computer program; the transceiver is used to send and receive data under control of the processor; and the processor is used to read the computer program in the memory and perform the following operations:
reporting a media access control control element (MAC CE) or uplink control information (UCI), wherein the MAC CE or UCI carries a power backoff value caused by exceeding a maximum transmit power limit corresponding to a target transmission or a first parameter;
wherein the target transmission includes at least one of the following: a physical uplink shared channel (PUSCH), or a physical uplink control channel (PUCCH), or a sounding reference signal (SRS);
the first parameter includes at least one of the following: a sounding reference signal (SRS) resource set (SRS resource set), or a transmission configuration indication (TCI) state, or a related higher layer parameter of a control resource set CORESET.

Optionally, the MAC CE includes a first identification bit and a second information field;
the first identification bit is used to identify the target transmission or the first parameter where power backoff occurs;
the second information field is used to indicate a power backoff value caused by exceeding the maximum transmit power limit corresponding to the target transmission or the first parameter.

Optionally, the MAC CE includes:
multiple third information fields; wherein each third information field is used to indicate a power backoff value corresponding to a target transmission or a first parameter associated with the third information field.

Optionally, the MAC CE further includes at least one of the following:
at least one fourth information field, wherein the fourth information field is used to indicate whether the third information field reports a power backoff value;

at least one fifth information field, wherein the fifth information field is used to indicate that a maximum transmit power causing power backoff is a maximum transmit power of the UE, or is used to indicate that a maximum transmit power causing power backoff is a maximum transmit power corresponding to the target transmission or the first parameter.

Optionally, the MAC CE includes an MPE field, and the MPE field is used to carry the power backoff value.

Optionally, the MAC CE further includes:
a second identification bit used to indicate a cause for the power backoff report.

Optionally, the cause of the power backoff reporting indicated by the second identification includes at least one of the following:
reporting of the backoff value caused only by MPE requirements, not due to power limits;
reporting of the backoff value caused only by power limits, not due to MPE requirements;
reporting of the backoff value caused by power limit and MPE requirements;
reporting of the backoff value not due to MPE requirements and not due to power limits; which can also be used as a reserved bit.

Optionally, when the MPE field indicates that the power backoff value is a power backoff value caused by the maximum power limit and the MPE requirement, the power backoff value indicated by the MPE field includes at least one of the following:
power management maximum power backoff value P-MPR;
power backoff value L-MPR caused by exceeding the maximum transmit power limit;
a sum of P-MPR and L-MPR;
a maximum value of P-MPR and L-MPR.

Optionally, the UCI includes: a power backoff value for each PUSCH; wherein the method further includes:
according to a predefined rule, determining a corresponding relationship between each power backoff value carried by the UCI and the target transmission or the first parameter.

Optionally, the UCI includes: a first valid bit and a second valid bit;
the first valid bit is used to indicate a target transmission or a first parameter for power backoff; the second valid bit is used to indicate the power backoff value.

Optionally, the first valid bit indicates the target transmission or first parameter for power backoff by means of joint coding or bit mapping.

Optionally, the payload of the UCI is variable; and the processor is used to read the computer program in the memory and perform the following operations:
determining the number of bits of the second valid bit according to the number of target transmissions or first parameters for power backoff indicated by the first valid bit.

One embodiment of the present disclosure provides a power backoff value reporting device, including:
a second reporting unit used to report a media access control control element (MAC CE) or uplink control information (UCI), wherein the MAC CE or UCI carries a power backoff value caused by exceeding a maximum transmit power limit corresponding to a target transmission or a first parameter;
wherein the target transmission includes at least one of the following: a physical uplink shared channel (PUSCH), or a physical uplink control channel (PUCCH), or a sounding reference signal (SRS);
the first parameter includes at least one of the following: a sounding reference signal (SRS) resource set (SRS resource set), or a transmission configuration indication (TCI) state, or a related higher layer parameter of a control resource set CORESET.

One embodiment of the present disclosure provides a processor-readable storage medium, including a computer program stored thereon; wherein the computer program is used to cause a processor to execute the above method.

One embodiment of the present disclosure provides a chip, where the chip includes a processor and a communication interface. The communication interface is coupled to the processor, and the processor is configured to execute programs or instructions to implement the above method.

One embodiment of the present disclosure provides a computer program product, which is stored in a non-volatile storage medium. The computer program product is executed by at least one processor to implement the above method.

The above technical solutions of the present disclosure have at least the following beneficial effects.

According to the PHR reporting method, the power backoff value reporting method and device, and the UE, the PHR reporting method or the power backoff value reporting method are proposed suitable for scenarios in which multiple target transmissions or transmissions corresponding to multiple first parameters are transmitted simultaneously. Through the PHR reporting method, the network side can accurately obtain the power headroom corresponding to each target transmission or the first parameter, and then decide to increase or decrease the UE's transmit power in subsequent scheduling, so that the network side can appropriately adjust the power control parameters according to the UE's reporting and make more effective use of the UE's transmit power.

### BRIEF DESCRIPTION OF THE DRAWINGS

FIG. 1 is a block diagram of a wireless communication system applicable to embodiments of the present disclosure;
FIG. 2 is a schematic diagram showing steps of a PHR reporting method according to an embodiment of the present disclosure;
FIG. 3 is a first schematic diagram of PHR MAC CE of a first example according to an embodiment of the present disclosure;
FIG. 4 is a second schematic diagram of PHR MAC CE of a first example according to an embodiment of the present disclosure;
FIG. 5 is a third schematic diagram of PHR MAC CE of a first example according to an embodiment of the present disclosure;
FIG. 6 is a schematic diagram showing steps of a power backoff value reporting method according to an embodiment of the present disclosure;
FIG. 7 is a first schematic diagram showing transmission of a second example according to an embodiment of the present disclosure;
FIG. 8 is a second schematic diagram showing transmission of a second example according to an embodiment of the present disclosure;
FIG. 9 is a first schematic diagram of a terminal according to an embodiment of the present disclosure;
FIG. 10 is a schematic diagram of a PHR reporting apparatus according to an embodiment of the present disclosure;
FIG. 11 is a second schematic diagram of a terminal according to an embodiment of the present disclosure; and
FIG. 12 is a schematic diagram of a power backoff value reporting apparatus according to an embodiment of the present disclosure.

### DETAILED DESCRIPTION

In order to make technical problems to be solved, technical solutions and advantages of the present disclosure clearer, the following will be described in detail in conjunction with the accompanying drawings and specific embodiments.

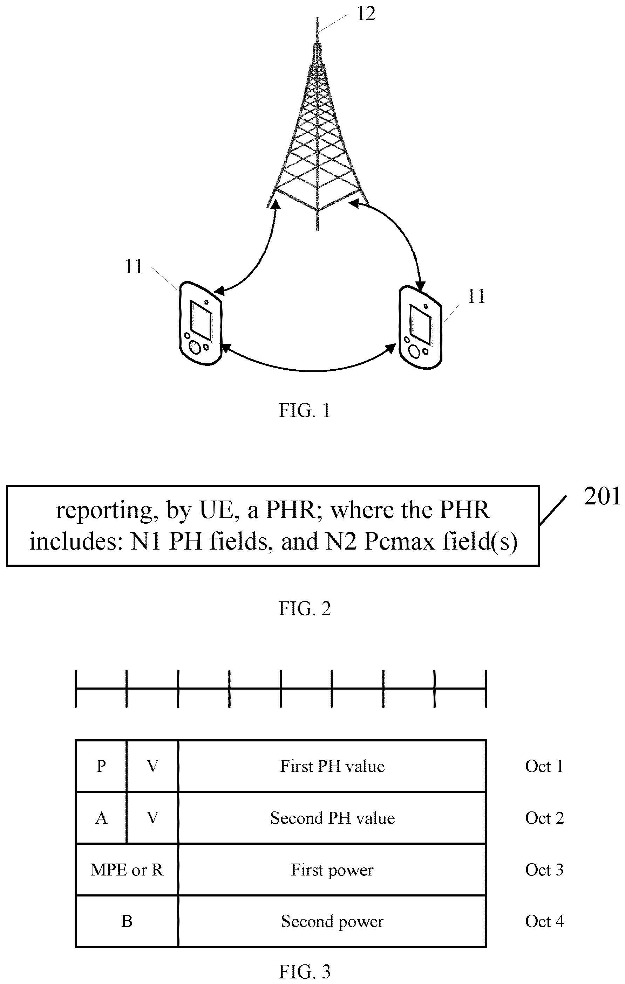

FIG. 1 shows a schematic diagram of a wireless communication system applicable to embodiments of the present disclosure. The wireless communication system includes a terminal 11, a network device 12. The terminal 11 may also be called a terminal device or a user terminal (UE). It is to be noted that the specific type of the terminal 11 is not limited in the embodiment of the present disclosure. The network device 12 may be a base station or a core network. It is to be noted that in the embodiment of the present disclosure, the base station in the NR system is only taken as an example, but the specific type of the base station is not limited.

In the embodiment of the present disclosure, the term "and/or" describes association relationship of associated objects, indicating that there can be three relationships, for example, A and/or B means that there are three situations: there is A alone, there are both A and B, there is B alone. The character "/" generally indicates that before and after related objects are in an "or" relationship.

In the embodiment of the present disclosure, the term "plurality" refers to two or more than two, and other quantifiers are similar.

The technical solutions in the embodiments of the present disclosure will be clearly and completely described below with reference to the accompanying drawings in the embodiments of the present disclosure. Obviously, the described embodiments are only some embodiments of the present disclosure, rather than all embodiments. Based on the embodiments in the present disclosure, all other embodiments obtained by those of ordinary skill in the art without creative efforts fall within the scope of protection of the present disclosure.

The technical solution of the embodiment of the present disclosure may be applied to various systems, especially the fifth generation communication (5G) system. For example, applicable systems may be Global System of Mobile communication (GSM) system, Code Division Multiple Access (CDMA) system, Wideband Code Division Multiple Access (WCDMA) system, General Packet Radio Service (GPRS) system, Long Term Evolution (LTE) system, TD-LTE and FDD LTE, Long Term Evolution Advanced (LTE-A) system, Universal Mobile Telecommunication System (UMTS), Worldwide Interoperability for Microwave Access (WiMAX) system, or 5th-Generation (5G) New Radio (NR) system. Each of these systems includes a terminal device and a network device. Each system further includes a core network part, e.g., an Evolved Packet System (EPS) or 5G system (5GS).

Terminal devices involved in the embodiments of the present disclosure may be a device that provides voice and/or data connectivity to a user, a handheld device with a wireless connection function, or other processing device coupled to a wireless modem. In different systems, names of terminal devices may be different. For example, in the 5G system, the terminal device may be referred as user equipment (UE). A wireless terminal device may communicate with one or more core networks (CN) via a radio access network (RAN). The wireless terminal device may be a mobile terminal device such as a mobile phone (or referred as cell phone), or a computer with a mobile terminal device, such as a portable, pocket-sized, handheld, computer built-in or vehicle-mounted mobile device, which exchange language and/or data with wireless access networks, for example, a personal communication service (PCS) phone, a cordless phone, a session initiated protocol (SIP) phone, a wireless local loop (WLL) station, a personal digital assistant (PDA) and other device. The wireless terminal device may also be referred to as system, subscriber unit, subscriber station, mobile station, mobile, remote station, access point, remote terminal, access terminal, user terminal, user agent, or user device, which are not limited in the embodiments of the present disclosure.

The network device involved in the embodiments of the present disclosure may be a base station, and the base station may include a plurality of cells for providing services for the terminal. According to different specific application scenarios, the base station may also be referred as an access point, or the base station may be a device in an access network that communicates with wireless terminal devices through one or more sectors on air interfaces, or other names. The network device may be used to exchange received frames with internet protocol (IP) packets, and act as a router between the wireless terminal device and the rest of the access network, where the rest of the access network may include an internet protocol (IP) communication network. The network device may also coordinate attribute management for air interfaces. For example, the network device involved in the embodiments of the present disclosure may be a base transceiver station (BTS) in global system for mobile communications (GSM) or code division multiple access (CDMA), a NodeB in wide-band code division multiple access (WCDMA), an evolutional Node B (eNB or e-NodeB) in long term evolution (LTE) system, a 5G base station (gNB) in the 5G network architecture (next generation system), a home evolved Node B (HeNB), a relay node, a femto, or a pico, which are not limited in the embodiments of the present disclosure. In some network structures, the network device may include a centralized unit (CU) node and a distributed unit (DU) node; and the centralized unit and the distributed unit may also be geographically separated.

Each of the network device and the terminal can use one or more antennas for multi input multi output (MIMO) transmission between the network device and the terminal. The MIMO transmission may be single user MIMO (SU-MIMO), or multiple user MIMO (MU-MIMO). According to forms and numbers of antenna combinations, MIMO transmission may be two dimensional-MIMO (2D-MIMO), three dimensional-MIMO (3D-MIMO), full dimensional-MIMO (FD-MIMO), or massive-MIMO, or diversity transmission, precoding transmission, or beamforming transmission.

As shown in FIG. 2, one embodiment of the present disclosure provides a PHR reporting method, including:
Step 201: reporting, by a terminal, a PHR; where the PHR includes: N1 power headroom (PH) fields, and N2 maximum power (Pcmax) field(s), N1 is an integer greater than or equal to 2, and N2 is an integer greater than or equal to 1.

Each PH field is used to indicate a power headroom of corresponding target transmission; N2 Pcmax fields are used to indicate maximum transmission powers corresponding to different target transmissions or different first parameters.

The target transmission includes at least one of the following: physical uplink shared channel (PUSCH), or physical uplink control channel (PUCCH), or sounding reference signal (SRS).

The first parameter includes: sounding reference signal (SRS) resource set (SRS resource set), or transmission configuration indication (TCI) state, or related higher layer parameter of a control resource set (CORESET) (such as a CORESET pool index (CORESETPoolIndex)).

Optionally, different target transmissions correspond to different antenna panels, or different first parameters correspond to different antenna panels.

In an optional embodiment of the present disclosure, when N2 is greater than or equal to 2 as well as N2 is equal to N1, each of the Pcmax fields is used to explicitly indicate maximum transmit powers corresponding to different target transmissions or different first parameters.

The PH fields are associated with the Pcmax fields in a one-to-one manner; a PH value of each PH field is determined by a power value of the Pcmax field corresponding to the PH field.

For example, N2=N1=2, the PHR includes 2 PH fields and 2 Pcmax fields. The 2 Pcmax fields correspond to power limits of 2 panels respectively. The 2 PH fields report a first PH value and a second PH value, respectively; and the 2 Pcmax fields indicate a first power and a second power corresponding to the 2 panels, respectively.

The first PH value corresponds to the first power, and the second PH value corresponds to the second power. That is, the first PH value is calculated based on the first power and a first power control value (which is a transmit power estimated according to a power control parameter indicated by the network side for a panel or a power control parameter associated with a TCI state), and the second PH value is calculated based on the second power and a second power control value (which is a transmit power estimated according to a power control parameter indicated by the network side for another panel or a power control parameter associated with another TCI state).

For example, the first PH value=the first power-the first power control value;
the second PH value=the second power-the second power control value.

As an optional embodiment, the method further includes:
determining an association relationship between the PH field and the Pcmax field according to a predefined association relationship. For example, an i-th PH value is associated with an i-th power, or a first PH value is associated with a second power, and a second PH value is associated with a first power.

Optionally, the associated PH field and Pcmax field are both associated with an i-th SRS resource set, or are associated with an i-th TCI state, or are associated with an i-th value of higher layer parameter CORESETPoolIndex.

Alternatively, the method further includes:
determining an association relationship between the PH field and the Pcmax field according to the first parameter.

Optionally, the determining an association relationship between the PH field and the Pcmax field according to the first parameter, includes:
determining the association relationship between the PH field and the Pcmax field according to an association relationship between the PH field and the first parameter as well as an association relationship between the first parameter and the Pcmax field.

For an instance in which the i-th PH value is associated with an m-th SRS resource set, or associated with an m-th TCI state, or associated with an m-th value of the higher layer parameter CORESETPoolIndex, and the m-th SRS resource set, or the m-th TCI state, or the m-th value of the higher layer parameter CORESETPoolIndex is associated with a j-th power, then the i-th PH value is associated with the j-th power.

Alternatively, the determining an association relationship between the PH field and the Pcmax field according to the first parameter, includes:
determining the association relationship between the PH field and the Pcmax field according to an association relationship between the PH field and the first parameter, an association relationship between the Pcmax field and the second parameter as well as an association relationship between the first parameter and the second parameter; where the second parameter includes: SRS resource set, or TCI state, or related higher layer parameter of CORESET.

For example, the i-th PH value is associated with the m-th SRS resource set, or associated with the m-th TCI state, or associated with the m-th value of the higher layer parameter CORESETPoolIndex; the j-th Pcmax field is associated with the n-th SRS resource set, or associated with the n-th TCI state, or associated with the n-th value of the higher layer parameter CORESETPoolIndex; and at least one of the m-th SRS resource set, the m-th TCI state or the m-th values of the higher layer parameter CORESETPoolIndex is associated with at least one of the n-th SRS resource set, the n-th TCI state or the n-th values of the higher layer parameter CORESETPoolIndex, then the i-th PH value is associated with the j-th Pcmax field.

It is to be noted that when N2 is equal to 2, the embodiment of the present application also defines a first SRS resource set, a second SRS resource set, a first TCI state, a second TCI state, a first value of a higher layer parameter CORESETPoolIndex, and a second value of the higher layer parameter CORESETPoolIndex.

The first SRS resource set refers to an SRS resource set with a lower ID value (i.e., a smaller srs-ResourceSetId parameter value) among two SRS resource sets configured by the network side for the UE for simultaneous uplink transmission, or an SRS resource set corresponding to the first TCI state, or an SRS resource set corresponding to a first value of the higher layer parameter CORESETPoolIndex. The second SRS resource set refers to an SRS resource set with a higher ID value (i.e., a larger srs-ResourceSetId parameter value) among the two SRS resource sets configured by the network side for the UE for simultaneous uplink transmission, or an SRS resource set corresponding to a second TCI state, or an SRS resource set corresponding to a second value of the higher layer parameter CORESETPoolIndex.

The first TCI state refers to a first TCI state of two TCI states configured or indicated by the network side, and the second TCI state refers to a second TCI state of the two TCI states configured or indicated by the network side.

The first value of the higher layer parameter CORESETPoolIndex is 0 (when the higher layer parameter CORESETPoolIndex is not configured, it is also considered that the first value of the higher layer parameter CORESETPoolIndex is 0), and the second value of the higher layer parameter CORESETPoolIndex is 1.

In another optional embodiment of the present disclosure, when N2 is greater than or equal to 2 and N2 is equal to N1, the N2 Pcmax fields include: one first Pcmax field and (N2-1) second Pcmax fields; the first Pcmax field is used to indicate a maximum transmit power of the terminal, and each of the second Pcmax fields is used to explicitly indicate maximum transmit powers corresponding to different target transmissions or different first parameters.

Optionally, the first Pcmax field and all the second Pcmax fields together implicitly indicate a maximum transmission power corresponding to a target transmission or a first parameter.

The (N2-1) second Pcmax fields are associated with the (N2-1) PH fields in a one-to-one manner, and a PH value of each PH field is determined by a power value of the second Pcmax field corresponding to the PH field and/or a power value of the first Pcmax field.

For example, N2=N1=2, the PHR includes 2 PH fields and 2 Pcmax fields. The 2 Pcmax fields correspond to a total power limit of the terminal and a power limit of a panel respectively. The 2 PH fields report the first PH value and the second PH value respectively; and the 2 Pcmax fields indicate the first power and the second power corresponding to the 2 panels respectively.

The first PH value is calculated based on the first power and a first power control value (which is a transmit power estimated according to a power parameter associated with a first TCI state), and the second PH value is calculated based on a difference between the second power and the first power, and a second power control value (which is a transmit power estimated according to a power parameter associated with a second TCI state). For example, the first PH value=the first power-the first power control value; the second PH value=the second power-the first power-the second power control value.

Alternatively, the first PH value is calculated based on a difference between the first power and the second power, and a first power control value (which is a transmit power estimated according to a power parameter associated with a first TCI state), and the second PH value is calculated based on the second power and the second power control value (which is a transmit power estimated according to a power parameter associated with a second TCI state). For example, the first PH value=the first power-the second power-the first power control value; the second PH value=the second power-the second power control value.

In another optional embodiment of the present disclosure, when N2 is equal to 1, one Pcmax field is used to indicate a maximum transmit power of the terminal (such as P_{CMAX,f,c}(i)); one Pcmax field can be understood as implicitly indicating maximum transmit powers corresponding to different target transmissions or different first parameters through a power factor.

The PH value of each PH field is determined by the power value of the Pcmax field and a power factor corresponding to the PH field.

For example, when N1=2, a method for calculating the pH value of each PH range is as follows:
a first PH value is calculated according to α₁P_{CMAX,f,c}(i) and a first power control value (which is a transmit power estimated according to a power parameter associated with a first TCI state); where α₁ is a power factor corresponding to a PH field;
a second PH value is calculated according to α₂P_{CMAX,f,c}(i) and a second power control value (which is a transmit power estimated according to a power parameter associated with a second TCI state); where α₂ is a power factor corresponding to another PH field.

As an optional embodiment, the power factor corresponding to the PH field is associated with the first parameter corresponding to the PH field.

Alternatively, the power factor is a predefined value.

Alternatively, the PHR carries the power factor.

For example, if any one of values of α₁ and α₂ is carried in the PHR report, the other one is determined according to the following formula, for example, α₂ = 1 - α₁, α₁ = 1 - α₂, α₂ = α₁.

Optionally, α₁ is associated with the first SRS resource set, or associated with the first TCI state, or associated with the first value of the higher layer parameter CORESETPoolIndex; α₂ is associated with the second SRS resource set, or associated with the second TCI state, or associated with the second value of the higher layer parameter CORESETPoolIndex.

Optionally, if the PHR carries the power factor, the method further includes:
in case that a change of the power factor is greater than a first threshold, triggering reporting of the PHR; where the first threshold may be configured, pre-configured or pre-agreed by the network, and is not specifically limited here.

In another optional embodiment of the present disclosure, when N2 is equal to 1, one Pcmax field is used to explicitly indicate a maximum transmit power corresponding to different target transmissions or different first parameters; the different target transmissions or different first parameters correspond to the same maximum transmit power.

The maximum transmit power indicated by the Pcmax field does not include a power backoff value.

In other words, the maximum transmit power indicated by the Pcmax field is the power limit of each panel, that is, the maximum power limit values of multiple panels are equal.

It is to be noted that it is reasonable to make the maximum power limits of multiple panels the same. However, in the relevant PHR report, the value of *P*_{CMAX*,f,c*}(*i*) is a maximum power value after deducting the power backoff value, and it is unreasonable to make the power backoff values of multiple panels the same. Because directions of various panels are different, radiation to the human body may not be the same. Therefore, in order to ensure that the maximum power limits of multiple panels are the same, in the embodiment of the present disclosure, the maximum power limit does not include the P-MPR power backoff value.

As an optional embodiment, the PHR further includes: a maximum permissible exposure (MPE) field and a first information field indicating association between the MPE field and the PH field.

The PH value of the PH field associated with the MPE field is related to the value of the MPE field; optionally, the PH value associated with reporting of the MPE field needs to have the value of the MPE field subtracted during calculation.

The MPE field is also called MPE or R field. If the MPE field is associated with a first PH field, a PH value of the first PH field is calculated through formula: the first power (Pcmax field indication value)-MPE field indication value-first power control value (which is a transmit power estimated according to the power parameter associated with the first TCI state), that is, the value of the MPE field needs to be subtracted; a PH value of the second PH field that is not associated with the MPE field is calculated through formula: the first power (Pcmax field indication value)-first power control value (which is a transmit power estimated according to the power parameter associated with the first TCI state), that is, there is no need to subtract the value of the MPE field.

In order to more clearly describe the PHR reporting method according to the embodiment of the present disclosure, an example is provided hereinafter for illustration.

### First example

In case of simultaneous uplink multi-panel transmission, any of the following PHR reporting formats can be used:
solution 1: UE reports 2 PH values and 2 P_{CMAX,f,c}(i) values. The 2 P_{CMAX,f,c}(i) values correspond to power limits of 2 panels respectively.

The two PH values are respectively referred to as a first PH value and a second PH value; and the two *P*_{CMAX,*f,c*}(*i*) values are respectively referred to as a first power and a second power, which are used to indicate a maximum power limit of each panel (including the case where a backoff value is subtracted). This solution is applicable to the case where a total power limit is not considered (i.e., there is no total power limit, and there is only a power limit of a single panel), or a total power is greater than or equal to a sum of the power limits of the two panels. PHR Medium Access Control Control Element (MAC CE) is shown in FIG. 3.

The first PH value corresponds to the first power, and the second PH value corresponds to the second power. That is, the first PH value is calculated based on the first power and A first power control value (which is an estimated transmit power), and the second PH value is calculated based on the second power and a second power control value (which is an estimated transmit power). The first power control value and the second power control value refer to estimated power values which are calculated based on power parameters associated with multiple TCI states indicated by a gNB. For example, the gNB indicates 2 TCI states, each TCI state is associated with a set of power parameters, then the first power control value is an estimated power value which is calculated based on power parameters associated with a first TCI state indicated by the gNB, and the second power control value is an estimated power value which is calculated based on power parameters associated with a second TCI state indicated by the gNB.

In addition, an association relationship between the first PH value and the first power, or an association relationship between the second PH value and the second power, can be determined according to a SRS resource set, or TCI state, or CORESETPoolIndex value (a higher layer parameter configured for each CORESET, and used to determine CORESET grouping, or an association relationship between CORESET and transmission reception point (TRP)). For example, the first PH value or the first power is associated with the first SRS resource set, or is associated with the first TCI state, or is associated with a first value of the higher layer parameter CORESETPoolIndex; the second PH value or the second power is associated with the second SRS resource set, or is associated with the second TCI state, or is associated with a second value of the higher layer parameter CORESETPoolIndex. In this association method, an i-th (i=1, 2) PH value is fixedly associated with an i-th (i=1, 2) power, and the two are associated with the same SRS resource set, or TCI state, or CORESETPoolIndex value.

For another example, an association relationship between an i-th (i=1, 2) PH value and a j-th (j=1, 2) power may be established based on at least two of an SRS resource set, TCI state or CORESETPoolIndex value. For example, an i-th (i=1, 2) PH value is associated with an i-th SRS resource set, and a j-th power is associated with a j-th TCI state. Since the i-th SRS resource set is associated with the j-th TCI state (for example, the association relationship between the two is determined by a predefined rule or by using a TCI state indication), the i-th PH value is associated with the j-th power. When the association relationship between the SRS resource set and the TCI state is dynamically changed, the j-th (j=1, 2) power associated with the i-th (i=1, 2) PH value will also change accordingly.

Correspondingly, the first PH value is calculated based on the first power and a first power control value (which is a transmit power estimated according to power parameters associated with the first TCI state); the second PH value is calculated based on the second power and a second power control value (which is a transmit power estimated according to power parameters associated with the second TCI state).

The first power and the second power depend on capability of the UE, such as a transmit power capability of each panel, or a power limit value of each panel determined by the gNB or UE according to actual scheduling situation. For example, the first power and the second power are both XdBm, or the first power is YdBm and the second power is ZdBm, where X, Y, and Z are determined according to a predefined rule, or are determined dynamically or semi-statically by the gNB or UE according to the actual scheduling situation.

In a PHR media access control (MAC) control element (CE), a first PH value corresponds to a P field and a V field, where the P field is used to indicate whether to explicitly report a maximum permissible exposure (MPE) (first MPE reporting), and the V field is used to indicate whether the first PH value is calculated based on actual transmission or based on a reference format. According to FIG. 3, a second PH value corresponds to an A field and a V field; where the V field is used to indicate whether the second PH value is calculated based on actual transmission or based on a reference format, and the A field can be a P or R field, or a P field or an R field. When the A field is a P or R field, whether a P field or an R field is in the PHR MAC CE can be determined according to a higher layer parameter configuration. When the first parameter takes the value of 'Pvalue', the A field is a P field, and when the first parameter takes the value of 'Rvalue', the A field is an R field; or, when a first parameter is configured, the A field is a P field, and when the first parameter is not configured, the A field is an R field. When the A field is a P field, or an R field, the protocol predetermines whether an information field corresponding to the second PH value is a P field or an R field. If the A field is a P field (including configuring the A field as a P field by higher layer signaling, and also including determining the A field as a P field according to predefined rules), the P field corresponding to the second PH value is used to indicate whether the second PH value or the second power corresponds to an MPE report, or whether a second MPE report is performed. If the A field is an R field (i.e., a reserved state), the P field corresponding to the first PH value jointly indicates whether the first MPE report and the second MPE report are performed, or indicates that the second power or the second PH value is not reported by MPE (second MPE report). The first MPE report and the second MPE report respectively indicate the MPE reports corresponding to the first power and the second power, or indicate the MPE reports corresponding to the first PH value and the second PH value. When performing the first MPE report and the second MPE report, the first MPE report is associated with the first SRS resource set, or associated with the first TCI state, or associated with the first value of the higher layer parameter CORESETPoolIndex; the second MPE report is associated with the second SRS resource set, or associated with the second TCI state, or associated with the second value of the higher layer parameter CORESETPoolIndex.

The first power corresponds to the MPE or R field, where the MPE or R field is used to indicate whether to perform MPE reporting. Similarly, an association relationship between the MPE or R field and the first power can be determined based on the SRS resource set, or the TCI state, or the CORESETPoolIndex value. For example, the MPE or R field or the first power is associated with the first SRS resource set, or is associated with the first TCI state, or is associated with the first value of the higher layer parameter CORESETPoolIndex. The second power corresponds to the B field, where the B field can be the MPE or R field or the R field. For example, when the B field is the MPE or R field, the value of the second higher layer parameter or the A field indicates whether the B field is the MPE field or the R field; when the B field is the R field, it indicates that the second MPE reporting is not performed.

It is to be noted that in this solution, any pH value that meets the trigger condition can trigger the pH value reporting.

Solution 2: the UE reports 2 PH values and 2 *P*_{CMAX*,f,c*}(*i*) values. The *2 P*_{CMAX,*f,c*}(*i*) values correspond to a total power limit of the UE and a power limit of a panel respectively.

Similarly, the two PH values are respectively referred to as a first PH value and a second PH value, and the two *P*_{CMAX*,f,c*}(*i*) values are respectively referred to as a first power and a second power.

Example 1: the first PH value corresponds to the first power, and the second PH value corresponds to a difference between the second power and the first power (i.e., the first power is a power limit for a single panel, and the second power is a UE total power limit).

The first power and the first PH value are associated with the first SRS resource set, or are associated with the first TCI state, or are associated with a first value of the higher layer parameter CORESETPoolIndex.

The first PH value is calculated based on the first power and the first power control value (which is a transmit power estimated according to the power parameters associated with the first TCI state), and the second PH value is calculated based on a difference between the second power and the first power, and a second power control value (which is a transmit power estimated according to the power parameters associated with the second TCI state).

Example 2: the second PH value corresponds to the second power, and the first PH value corresponds to a difference between the first power and the second power (i.e., the second power is a power limit for a single panel, and the first power is a UE total power limit).

The second power and the second PH value are associated with the second SRS resource set, or are associated with the second TCI state, or are associated with a second value of the higher layer parameter CORESETPoolIndex.

The first PH value is calculated based on a difference between the first power and the second power, and a first power control value (which is a transmit power estimated according to the power parameters associated with the first TCI state), and the second PH value is calculated based on the second power and the second power control value (which is a transmit power estimated according to the power parameters associated with the second TCI state).

Solution 3: UE reports 2 PH values and 1 *P*_{CMAX,*f,c*}(*i*) value. The *P*_{CMAX*,f,c*}(*i*) is a total power limit of the UE.

The two PH values are respectively called a first PH value and a second PH value, and the *P*_{CMAX,*f,c*}(*i*) value is called the first power.

The first PH value is calculated according to *α*₁*P*_{CMAX*,f,c*}(*i*) and a first power control value (which is a transmit power estimated according to the power parameter associated with the first TCI state).

The second PH value is calculated according to *α*₂*P*_{CMAX*,f,c*}(*i*) and a second power control value (which is a transmit power estimated according to the power parameter associated with the second TCI state).

*α*₁ and *α*₂ can be pre-defined in the protocol; or any one of values of *α*₁ and *α*₂ can be carried in the PHR report, and the other one is determined according to the following formula, such as *α*₂ = 1 - *α*₁, *α*₁ = 1 - *α*₂,*α*₂ = *α*₁.

Further, *α*₁ is associated with the first SRS resource set, or associated with the first TCI state, or with a first value of the higher layer parameter CORESETPoolIndex; *α*₂ is associated with the second SRS resource set, or associated with the second TCI state, or associated with a second value of the higher layer parameter CORESETPoolIndex.

Optionally, when the PHR report carries any one of the values of *α*₁ and *α*₂, a large change in *α*₁ or *α*₂ may also trigger a PHR reporting.

Solution 4: UE reports two PH values and one *P*_{CMAX*,f,c*}(*i*) value. The *P*_{CMAX*,f,c*}(*i*) is a power limit of each panel of the UE, such as maximum power limit values of the two panels are equal.

The two PH values are respectively referred to as a first PH value and a second PH value, and the *P*_{CMAX*,f,c*}(*i*) value is referred to as a first power.

The 2 PH values are calculated based on the first power, the first PH value is calculated based on the first power and a first power control value (which is a transmit power estimated according to the power parameter associated with a first TCI state); the second PH value is calculated based on the first power and a second power control value (which is a transmit power estimated according to the power parameter associated with a second TCI state).

The first PH value is associated with the first SRS resource set, or associated with the first TCI state, or associated with the first value of the higher layer parameter CORESETPoolIndex; the second PH value is associated with the second SRS resource set, or associated with the second TCI state, or associated with the second value of the higher layer parameter CORESETPoolIndex.

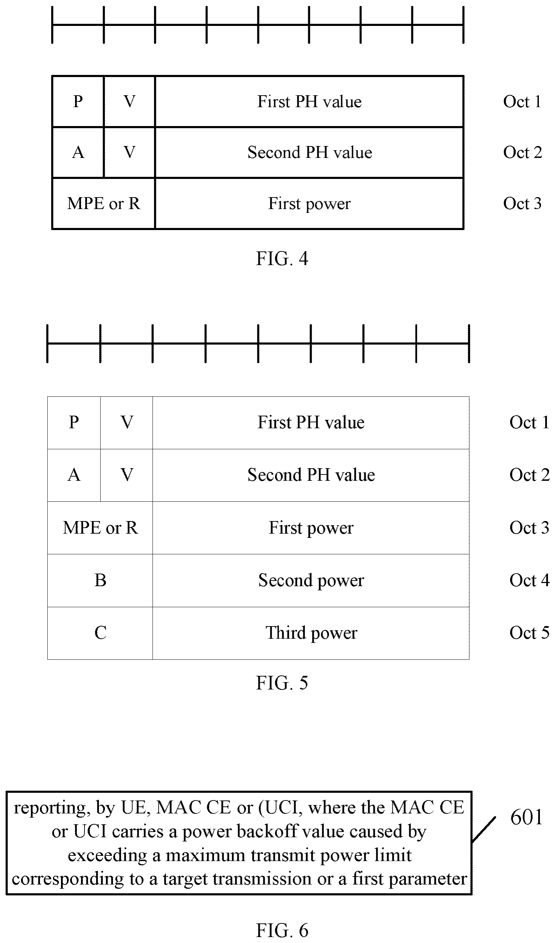

It is reasonable to make the maximum power limits of the two panels the same. However, in the PHR reporting, the *P*_{CMAX*,f,c*}(*i*) value is a maximum power value after deducting the power backoff value. It is unreasonable to make the power backoff values of the two panels the same, because directions of various panels are different, radiation to the human body may not be the same. In order to ensure that the maximum power limits of the two panels are the same, the maximum power limit (first power) does not to include the P-MPR power backoff value. The PHR MAC CE is shown in FIG. 4. P field is used to indicate whether to perform MPE reporting, and the A field is used to indicate whether the MPE report is associated with the first PH value or the second PH value, or to indicate which SRS resource set, or which TCI state or which value of the higher layer parameter CORESETPoolIndex the MPE report is associated with.

If the A field is 0, it means that the MPE report is associated with the first SRS resource set or the first TCI state or the first value of the higher layer parameter CORESETPoolIndex, because the first PH value is also associated with the first SRS resource set or the first TCI state or the first value of the higher layer parameter CORESETPoolIndex. Therefore, the influence of the MPE report needs to be considered when calculating the first PH value, for example, the first PH value=the first power-P-MPR value (MPE reported value)-the first power control value (which is a transmit power estimated according to the power parameter associated with the first TCI state); and calculation of the second PH value does not need to consider the influence of the MPE report, that is, the second PH value=the first power-the second power control value (which is a transmit power estimated according to the power parameter associated with the second TCI state). If the A field is 1, it means that the MPE report is associated with the second SRS resource set or the second TCI state or the second value of the higher layer parameter CORESETPoolIndex, because the second PH value is also associated with the second SRS resource set or the second TCI state or the second value of the higher layer parameter CORESETPoolIndex. Therefore, the influence of MPE reporting needs to be considered when calculating the second PH value, for example, the second PH value=the first power-P-MPR value (MPE reporting value)-the second power control value (which is a transmit power estimated according to the power parameter associated with the second TCI state); and calculation of the first PH value does not need to consider the influence of MPE reporting, that is, the first PH value=the first power-the first power control value (which is a transmit power estimated according to the power parameter associated with the first TCI state). In the above description, when the A field is 0, it means that the influence of MPE reporting needs to be considered when calculating the first PH value; and when the A field is 1, it means that the influence of MPE reporting needs to be considered when calculating the second PH value. It is also possible for indication that the A filed takes the value 0 or 1 to be the opposite of the above description, for example, when the A field is 0, it means that the influence of MPE reporting needs to be considered when calculating the second PH value, and when the A field is 1, it means that the influence of MPE reporting needs to be considered when calculating the first PH value.

Solution 5: UE reports 2 PH values and 3 *P*_{CMAX,*f,c*}(*i*) values. The *P*_{CMAX*,f,c*}(*i*) is power limits of two panels and a total power limit.

The two PH values are respectively referred to as a first PH value and a second PH value, and the three *P*_{CMAX*,f,c*}(*i*) values are respectively referred to as a first power, a second power and a third power. It is assumed that the third power is the total power limit of the UE, PHR MAC CE is shown in FIG. 5.

The definitions of the field A and the field B are similar to those of solution 1, and a field C can be MPE or field R, or field R. When the field C is MPE or R field, it is determined whether the field C is for MPE reporting or is in a reserved state according to configuration of the third higher layer parameter or indication of field P or field P and field A. When MPE reporting is performed, it indicates a total power backoff value of UE. For example, in simultaneous uplink transmission, 2 panels radiate to the human body, the power of one panel is backed off by 3dB, and the power of the other panel is backed off by 6dB, then the MPE reporting value of the field C is 9dB. When reporting, the first power and the third power can be reported in MPE, and the field B corresponding to the second power is always in a reserved state, or the second power and the third power can be reported in MPE, and the field MPE or R corresponding to the first power is always in a reserved state. In this way, the gNB can infer the power backoff value of another panel based on the total power backoff and the power backoff value of one panel; or, the C field is always in the reserved state (R field), and the gNB can also calculate the total power backoff value based on the MPE reporting corresponding to the first power and the second power.

Optionally, in each of the above solutions, the two PH values may also be differences between the total power limit of the UE (such as the power limit of each panel is equal to the total power limit) and two gNB power control power values, which is not specifically limited here.

In summary, the embodiments of the present disclosure propose a PHR reporting method suitable for scenarios in which multiple target transmissions or transmissions corresponding to multiple first parameters are transmitted simultaneously. Through the PHR reporting method, the network side can accurately obtain the power headroom corresponding to each target transmission or the first parameter, and then decide to increase or decrease the UE's transmit power in subsequent scheduling, so that the network side can appropriately adjust the power control parameters according to the UE's reporting and make more effective use of the UE's transmit power.

As shown in FIG. 6, one embodiment of the present disclosure further provides a power backoff value reporting method. The method includes:
Step 601: reporting, by a user equipment (UE), a media access control control element (MAC CE) or uplink control information (UCI), where the MAC CE or UCI carries a power backoff value caused by exceeding a maximum transmit power limit corresponding to a target transmission or a first parameter.

The target transmission includes at least one of the following: a physical uplink shared channel (PUSCH), or a physical uplink control channel (PUCCH), or a sounding reference signal (SRS).

The first parameter includes at least one of the following: a sounding reference signal (SRS) resource set (SRS resource set), or a transmission configuration indication (TCI) state, or a related higher layer parameter of a control resource set CORESET (such as a CORESET pool index (CORESETPoolIndex)).

Optionally, different target transmissions correspond to different antenna panels, or different first parameters correspond to different antenna panels.

In an optional embodiment of the present disclosure, the MAC CE includes a first identification bit and a second information field.

The first identification bit is used to identify the target transmission or the first parameter where power backoff occurs.

The second information field is used to indicate a power backoff value caused by exceeding the maximum transmit power limit corresponding to the target transmission or the first parameter.

For example, the first identification bit is used to indicate which panel or PUSCH has experienced power backoff, such as indicating that PUSCH corresponding to the parameter CORESETPoolIndex, SRS resource set ID or the TCI state has experienced power backoff.

In another optional embodiment of the present disclosure, the MAC CE includes:
multiple third information fields (which may be referred to as L-MPR reporting information fields); where each third information field is used to indicate a power backoff value corresponding to a target transmission or a first parameter associated with the third information field.

For example, an i-th L-MPR reporting information field is associated with an i-th SRS resource set or an i-th TCI state or an i-th value of the higher layer parameter CORESETPoolIndex; then the i-th L-MPR reporting information field is used to indicate a power backoff value corresponding to the i-th SRS resource set or a power backoff value corresponding to the i-th TCI state or a power backoff value corresponding to the i-th value of the higher layer parameter CORESETPoolIndex.

Optionally, the MAC CE further includes at least one of the following:
at least one fourth information field, where the fourth information field is used to indicate whether the third information field reports a power backoff value;
at least one fifth information field, where the fifth information field is used to indicate that a maximum transmit power causing power backoff is a maximum transmit power of the UE, or is used to indicate that a maximum transmit power causing power backoff is a maximum transmit power corresponding to the target transmission or the first parameter.

For example, when the MAC CE includes one fourth information field, it indicates whether to report two power backoff values; when the MAC CE includes two fourth information fields, each fourth information field is used to indicate whether an L-MPR reporting information field performs L-MPR reporting (establishing an association based on the SRS resource set, TCI status, or higher layer parameter CORESETPoolIndex).

Optionally, the power backoff value caused by exceeding the maximum transmit power limit corresponding to the target transmission or the first parameter may be referred to as L-MPR. L-MPR is a power backoff value independent of P-MPR (power management maximum power reduction in the related art), or L-MPR is a further power backoff value based on P-MPR, which is not specifically limited here.

In another optional embodiment of the present disclosure, the MAC CE includes an MPE field, and the MPE field is used to carry the power backoff value.

In the related art, the Maximum Power Reduction (MPR) field is used for P-MPR reporting, which reports a backoff value caused by MPE requirements. In the embodiment of the present disclosure, the MPE field is reused, that is, the MPE field can also be used to carry the power backoff value L-MPR introduced due to exceeding the maximum power limit.

Optionally, the MAC CE further includes:
a second identification bit used to indicate a cause for the power backoff report. For example, the second identification bit occupies 1 bit or 2 bits.

When the second identification occupies 1 bit, it can indicate one of the following two events/causes:
reporting of the backoff value caused only by MPE requirements, not due to power limits;
reporting of the backoff value caused only by power limits, not due to MPE requirements.

When the second identification occupies 2 bits, the cause of the power backoff reporting indicated by the second identification includes at least one of the following:
reporting of the backoff value caused only by MPE requirements, not due to power limits;
reporting of the backoff value caused only by power limits, not due to MPE requirements;
reporting of the backoff value caused by power limit and MPE requirements;
reporting of the backoff value not due to MPE requirements and not due to power limits; which can also be used as a reserved bit.

As another optional embodiment, when the MPE field indicates that the power backoff value is a power backoff value caused by the maximum power limit and the MPE requirement, the power backoff value indicated by the MPE field includes at least one of the following:
power management maximum power backoff value P-MPR;
power backoff value L-MPR caused by exceeding the maximum transmit power limit;
a sum of P-MPR and L-MPR;
a maximum value of P-MPR and L-MPR.

In another optional embodiment of the present disclosure, the UCI includes: a power backoff value for each PUSCH; wherein the method further includes:
according to a predefined rule, determining a corresponding relationship between each power backoff value carried by the UCI and the target transmission or the first parameter.

For example, N bits are used to indicate each power backoff value, the first N bits (Most Significant Bit, MSB) correspond to a power backoff value of PUSCH corresponding to the first SRS resource set or the first TCI state or the first value of the higher layer parameter CORESETPoolIndex; the last N bits (Least Significant Bit, LSB) correspond to a power backoff value of PUSCH corresponding to the second SRS resource set or the second TCI state or the second value of the higher layer parameter CORESETPoolIndex.

In another optional embodiment of the present disclosure, which PUSCH to perform power backoff as well as the corresponding backoff value are reported via UCI. For example, the first N bits (MSB) are used to indicate which PUSCH to perform power backoff, and the last N bits (LSB) are used to indicate a specific backoff value; or, the last N bits (LSB) are used to indicate which PUSCH to perform power backoff, and the first N bits (MSB) are used to indicate a specific backoff value. That is, the uplink control information (UCI) includes: a first valid bit and a second valid bit.

The first valid bit is used to indicate a target transmission or a first parameter for power backoff; the second valid bit is used to indicate the power backoff value.

Optionally, the first valid bit indicates the target transmission or first parameter for power backoff by means of joint coding or bit mapping.

For example, the first valid bit uses 1 bit to indicate which PUSCH to perform power backoff, where 0 indicates power backoff on a first PUSCH, and 1 indicates power backoff on a second PUSCH. The first PUSCH is a PUSCH corresponding to the first SRS resource set or the first TCI state or the first value of the higher layer parameter CORESETPoolIndex; the second PUSCH is a PUSCH corresponding to the second SRS resource set or the second TCI state or the second value of the higher layer parameter CORESETPoolIndex.

For another example, the first valid bit uses 2 bits to indicate power backoff on which PUSCH:
**□**Joint encoding: indicating at least one of the following states:
**□**performing power backoff on the first PUSCH;
**□**performing power backoff on the second PUSCH;
**□**not performing power backoff on the first PUSCH and the second PUSCH;
**□**performing power backoff on the first PUSCH and the second PUSCH (corresponding to the case of variable UCI payload).

The first PUSCH corresponds to the first SRS resource set, or the first TCI state, or the first value of the higher layer parameter CORESETPoolIndex; the second PUSCH corresponds to the second SRS resource set, or the second TCI state, or the second value of the higher layer parameter CORESETPoolIndex.

Bit mapping: 2 bits respectively indicate whether performing power backoff on the first PUSCH and the second PUSCH.

Optionally, the payload of the UCI is variable; and the method further includes:
determining the number of bits of the second valid bit according to the number of target transmissions or first parameters for power backoff indicated by the first valid bit.

For example, the number of PUSCHs for which power backoff is performed is determined according to the indication of the first valid bit, thereby determining the number of bits of the second valid bit used to indicate the power backoff value (each PUSCH uses N1 bits to indicate the power backoff value).

In order to more clearly describe the power backoff value reporting method according to the embodiment of the present disclosure, an example is provided hereinafter for illustration.

### Second example

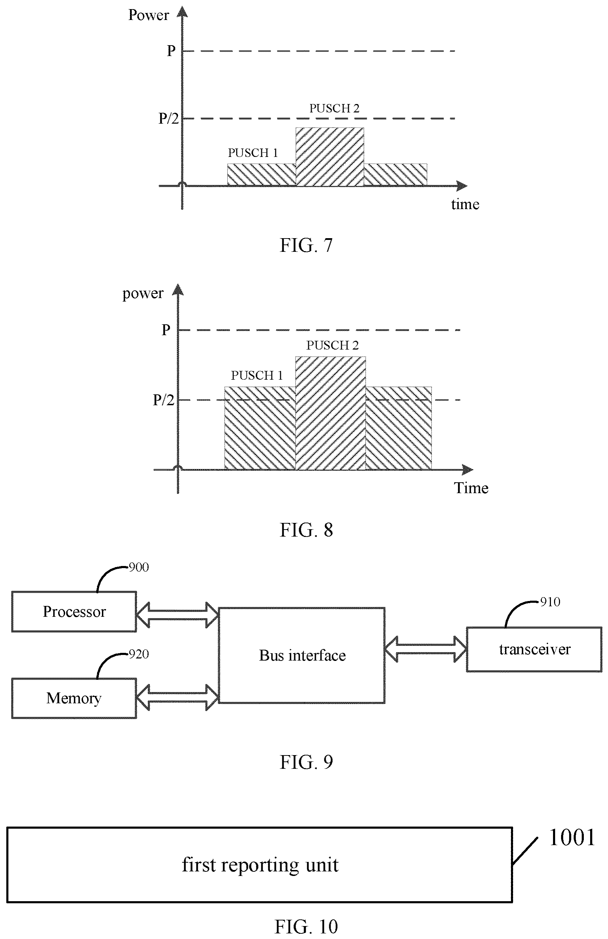

In case of multiple downlink control information (DCI), PUSCHs scheduled by two DCIs may overlap completely or partially in the time domain. In this case, how to ensure that a transmission power of UE independently scheduled by two TRPs does not exceed a maximum limit is a problem that needs to be discussed. One solution is to set a maximum value (P_predefined) for a transmission power of uplink channel or signal scheduled by each TRP, so that an uplink signal transmission power cannot exceed P_predefined when TRPs perform independent scheduling. For example, if the transmission power P1 and the transmission power P2 of the two panels and the total transmission power of the UE are all P, then it is pre-defined that the power of the uplink channel or signal scheduled by each TRP cannot exceed P/2, or cannot exceed Pcmax/2, etc., but this will result in that the transmission power of the UE cannot be fully utilized. For example, in FIG. 7, although it can be ensured that a total power of the two PUSCHs is less than P, in multiple symbols, a total power of the two PUSCHs is much less than P. This power allocation strategy will lead to reduced system performance. Another solution is to allow the power of each TRP to exceed P/2 during scheduling; when a total power scheduled by two TRPs exceeds the maximum power of the UE, the UE adjusts (such as power backoff) the transmit power of the uplink channel or signal, as shown in FIG. 8. In this way, the transmit power of the UE can be fully utilized.

In the related art, when the PH value is negative, it can reflect that the UE has backed off the gNB power control power value (that is, a transmit power estimated according to the power control parameters in the PH calculation), that is, the transmit power is backed off from the gNB power control power value to *P*_{CMAX*,f,c*}(*i*). In multi-panel transmission, due to existence of multiple power limits, it is impossible to determine whether the UE has backed off the gNB power control power value through the PH value. In order for the gNB to correctly adjust the power control parameters associated with the TCI state in subsequent scheduling, it is necessary to report the power backoff value of each panel/PUSCH transmission. The power backoff is a power backoff caused by the power exceeding the power limit of a single panel or the total power limit of the UE.

The power backoff value may be indicated by using at least one of the following solutions.

Solution 1: reporting the power backoff value in the PHR MAC CE. A backoff value indication method is as follows:
Option 1-1: using one or more newly added information fields to indicate a power backoff value introduced due to exceeding the maximum power limit.
Option 1-1-1: including an identification bit and a specific power backoff value.

The identification bit is used to indicate which panel or PUSCH has experienced power backoff, such as indicating that PUSCH corresponding to the parameter CORESETPoolIndex, SRS resource set ID, or the TCI state has experienced power backoff. The power backoff value is used to indicate a power backoff value introduced due to exceeding the maximum power limit.

For example, the PHR MAC CE in FIG. 3 is used to report the backoff value, where the A field is used to indicate the identification bit. When the A field is 0, it indicates that PUSCH associated with the first SRS resource set or the first TCI state or the first value of the higher layer parameter CORESETPoolIndex has undergone power backoff; when the A field is 1, it indicates that PUSCH associated with the second SRS resource set or the second TCI state or the second value of the higher layer parameter CORESETPoolIndex has undergone power backoff. In addition, the B field is used to indicate a specific power backoff value, and a value range of the power backoff value is the same as that of the P-MPR, as shown in Table 1; or a new reporting table is defined for the power backoff value caused by exceeding the power limit, as shown in Table 2. In order to distinguish it from P-MPR and Additional Maximum Power Reduction (A-MPR), the power backoff caused by exceeding the power limit is referred to as L-MPR for short. In Table 2, L-MPR_00 can take values starting from 0dB, including the case where no power backoff is performed, that is, the case where the power backoff value is 0.

**Table 1, P-MPR power back-off values**

| MPE | Measured P-MPR value |
|---|---|
| 0 | P-MPR_00 |
| 1 | P-MPR_01 |
| 2 | P-MPR_02 |
| 3 | P-MPR_03 |

**Table 2, L-MPR power back-off values**

| B field | power back-off value |
|---|---|
| 0 | L-MPR_00 |
| 1 | L-MPR_01 |
| 2 | L-MPR_02 |
| 3 | L-MPR_03 |

In addition, the A information field and the B information field may not be combined with the PHR MAC CE in FIG. 3. The A field may also include 2 bits to indicate whether L-MPR reporting is performed, and association between the reported L-MPR and the SRS resource set, TCI status or higher layer parameter CORESETPoolIndex. Alternatively, an A1 information field (such as 1 bit) is used to indicate whether L-MPR reporting is performed, an A2 information field (such as 1 bit) is used to indicate the association between the reported L-MPR and the SRS resource set, TCI status or higher layer parameter CORESETPoolIndex; and the B information field is used to indicate a specific power backoff value (corresponding to Table 1 or Table 2).

This method is applicable to the case where PUSCHs corresponding to two panels or TRPs do not need to reduce power at the same time, and power backoff is performed only on one PUSCH. In other words, when power backoff occurs on the PUSCH corresponding to any one panel or TRP, the corresponding L-MPR report can be triggered.

The exceeding power limit may be that a sum of powers of 2 PUSCH exceeds a certain limit; or power of a single PUSCH exceeds a certain limit; optionally, which power limit is exceeded may also be indicated to the base station, for example, another 1 bit is used to indicate that a total power of 2 PUSCHs exceeds a certain limit, or the power of a single PUSCH exceeds a certain limit.

Option 1-1-2: including two specific power backoff values.

For example, the PHR MAC CE always includes two L-MPR reporting information fields, and an association relationship between the backoff value and PUSCH determined according to predefined rules (such as parameters CORESETPoolIndex, SRS resource set ID, TCI status, etc.). For example, a first L-MPR reporting information field (or L-MPR or R information field) is associated with the first SRS resource set or the first TCI state or the first value of the higher layer parameter CORESETPoolIndex, that is, the corresponding backoff value is used to represent a power backoff value of PUSCH associated with the first SRS resource set or the first TCI state or the first value of the higher layer parameter CORESETPoolIndex; the second L-MPR reporting information field (or L-MPR or R information field) is associated with the second SRS resource set or the second TCI state or the second value of the higher layer parameter CORESETPoolIndex, that is, the corresponding backoff value is used to represent a power backoff value of PUSCH associated with the second SRS resource set or the second TCI state or the second value of the higher layer parameter CORESETPoolIndex.

Optionally, one or two information fields are used to indicate whether to perform L-MPE reporting, for example, the PHR MAC CE includes one or two Q fields. When one Q field is included, L-MPR reporting is performed when a fourth parameter is configured or the fourth parameter is the first value; when the fourth parameter is not configured or the fourth parameter is the second value, L-MPR reporting is not performed, or two L-MPR or R fields are reserved. When two Q fields are included, each Q field is used to indicate whether an L-MPR or R field performs L-MPR reporting.

Optionally, which power limit is exceeded may also be indicated to the base station, for example, 1 bit is used to indicate that a total power of 2 PUSCHs exceeds a certain limit, or that the power of a single PUSCH exceeds a certain limit.

Optionally, L-MPR is a power backoff value based on P-MPR (MPR reporting). For example, radiation exposure to the human body requires a 6dB backoff; after a 6dB backoff, it still exceeds the maximum power limit by 3dB; therefore, due to exceeding the power limit, an additional 3dB backoff is needed, that is, the L-MPR backoff value is 3dB. For another example, radiation exposure to the human body requires a 3dB backoff; after a 3dB backoff, it no longer exceeds the maximum power limit, that is, the L-MPR backoff value is 0dB or no L-MPR reporting is performed. This can effectively reduce the number of UE reporting triggered by power backoff.

Another trigger condition for PHR is added. When the backoff value caused by exceeding the power limit exceeds a certain threshold, or a change value exceeds a certain threshold, PHR reporting is triggered.

Option 1-2: MPE field is used for indication;

In option 1-1, P-MPR reporting (MPE or R field) and L-MPR reporting (L-MPR or R field) use different information fields. Considering that power reduction caused by various reasons is not common or any power reduction can cause the UE to report, the MPE or R field can also be reused for L-MPR reporting.

Optionally, a 1-bit or 2-bit identification bits (one or two information fields, which can use current R fields) are used to indicate the cause of the MPE reporting, and the identification bits are applicable to one or two MPE or R fields.

When one bit is used to indicate the cause of MPE reporting, one of the following two events/causes can be indicated:
MPE reporting caused only by MPE requirement, not due to power limits;
L-MPR reporting caused only by power limits, not due to MPE requirement.

When 2 bits are used to indicate the cause of MPE reporting, at least one of the following events/causes may be indicated:
MPE reporting caused only by MPE requirement, not due to power limits;
L-MPR reporting caused only by power limits, not due to MPE requirement;
reporting of the backoff value caused by power limit and MPE requirements;
reserved (i.e., reporting of the backoff value not due to MPE requirements and not due to power limits).

When the identification bit is not used to indicate the power backoff reason, the backoff value reporting indicates a power backoff value caused by the power limit and the MPE requirement, and may also indicate at least one of the following events/reasons:
MPE reporting caused only by MPE requirement, not due to power limit;
L-MPR reporting caused only by power limit, not due to MPE requirement;
reporting of the backoff value caused by power limit and MPE requirements;
reserved (reporting of the backoff value not due to MPE requirements and not due to power limits).

From the perspective of the gNB, both P-MPR and L-MPR are power backoff performed spontaneously by the UE, and both fall back on the scheduling power value of the gNB; then, there is no need to distinguish them in detail, and thus there is no need for an identification bit to indicate the reason for the power backoff.

When indicating a power backoff value due to both power limit and MPE requirement, the backoff value indicates at least one of the following:
P-MPR;
L-MPR;
P-MPR+L-MPR;
max(P-MPR, L-MPR).

For example, if a 6dB backoff is required due to radiation to the human body, and a 3dB backoff is required due to exceeding the power limit, then the backoff value is 6dB (this backoff value can satisfy the power limit and will not affect the human body); when no radiation is caused to the human body, but a 3dB backoff is required due to exceeding the power limit, the backoff value is 3dB. When power backoff is considered, if impact on human radiation is considered first, and then the impact of the power limit is considered on the basis of the power backoff caused by the impact on human radiation, for example, a 6dB backoff is required for radiation to the human body, and another 3dB backoff is required due to exceeding the power limit, then the backoff value is 3dB+6dB=9dB; for another example, when power backoff is considered, if the impact of the power limit is considered first, and then the impact of human radiation is considered on the basis of the power backoff caused by exceeding the power limit, for example, a 3dB backoff is required due to exceeding the power limit, and an additional 6dB backoff is required for radiation to the human body, then the backoff value is 3dB+6dB=9dB.

When power backoff is not required, the R field is still applicable, indicating that there is no radiation to the human body and the power does not exceed the limit, and thus there is no need for power backoff.

Option 1-3: PHR field is used for indication.

A power backoff value caused by exceeding the power limit is used as a new PHR type, such as type 4PHR. PHR reporting is triggered only when the PH value is negative (or at least one PH value is negative), and an absolute value of the reported PH value reflects a power control backoff value. For example, there are one or two information fields for type 4PHR reporting, and corresponding Pcmax should be a power value actually allocated to the corresponding PUSCH. Type 4PHR, Pcmax field and PUSCH are associated according to SRS resource set, TCI state or value of higher layer parameter CORESETPoolIndex; and the type 4PHR, Pcmax field and PUSCH corresponding to the same SRS resource set, TCI state or value of higher layer parameter CORESETPoolIndex are interrelated.

The value of the Pcmax field is set to a power value actually allocated to the corresponding PUSCH, so that the network side can calculate the corresponding gNB power control power value (which is a power value calculated by the power control parameter associated with the TCI state) based on the value of the Pcmax field and the type 4PH value.

For example, the maximum power limits of the two panels are P and the total power limit is also P. In the PHR reporting, the corresponding Pcmax of each PUSCH is a power allocation value of the current scheduling, such as a first PUSCH corresponding to αPa, and a second PUSCH corresponding to (1 - α)P or βP.

Option 1-4: Pcmax field is used for indication.

In the related art, P-MPR is also included in indication of the Pcmax field. The power backoff caused by power overlimit can be referred to as L-MPR, and can also be included in the indication of the Pcmax field. Each panel corresponds to a Pcmax field. Which Pcmax field contains the influence of L-MPR needs to be indicated to the gNB, and this can be indicated, such as indicating by the R field, or jointly indicating by the P field and R field, or by other information fields that indicate which one or more of L-MPR, P-MPR, A-MPR affect the backoff value. In the related art, if the higher layer parameter *mpe-Reporting-FR2* is not configured or it is in FR1 (i.e., low frequency), if the power backoff is not caused by power management but Pcmax has a different value (i.e., there is an influence of A-MPR), then, the P field indicates 1, otherwise the P field indicates 0. Taking the PHR MAC CE in FIG. 3 as an example, at least one of the following states can be indicated by combining the P field and the A field, or using the B field, or using the P field, or combining the A field and the B field:

Pcmax does not include any backoff values (e.g. no L-MPR, P-MPR, A-MPR);
Pcmax includes P-MPR;
Pcmax includes A-MPR;
Pcmax includes L-MPR;
Pcmax includes P-MPR and L-MPR;
Pcmax includes A-MPR and L-MPR;
Pcmax includes A-MPR and P-MPR;
Pcmax includes P-MPR, A-MPR and L-MPR.

Solution 2: a power backoff value is carried in UCI.

Considering that power allocation of two panels is different in each transmission, in order to dynamically reflect a power backoff caused by exceeding the maximum power limit, an actual backoff value can be indicated in the UCI.

Option 2-1: a specific power backoff amount for each PUSCH is reported.

If 4 bits are used to indicate backoff values of 2 PUSCHs respectively, and each backoff value is 2 bits, it can be reported according to quantized values of L-MPR in Table 2; and the power backoff value includes 0dB, that is, no power backoff is performed. For example, the first 2 bits (MSB) correspond to a power backoff value of PUSCH corresponding to a first SRS resource set or a first TCI state or a first value of the higher layer parameter CORESETPoolIndex; and the last 2 bits (LSB) correspond to a power backoff value of PUSCH corresponding to a second SRS resource set or a second TCI state or a second value of the higher layer parameter CORESETPoolIndex.

Option 2-2: which PUSCH the power backoff is applied to, as well as the corresponding backoff value, are reported.

When the UE performs power backoff, if the power exceeds the power limit, it can prioritize power backoff for one PUSCH so that the power limit meets the requirement. For example, 3 bits are used for reporting, 1 bit indicates which PUSCH requires power backoff, and 2 bits indicate a specific backoff value. If 1-bit indication of the MSB is 0, it means that PUSCH corresponding to a first SRS resource set or a first TCI state or a first value of the higher layer parameter CORESETPoolIndex (i.e., a first PUSCH) requires power backoff. When the 1-bit indication of the MSB is 1, it means that PUSCH corresponding to a second SRS resource set or a second TCI state or a second value of the higher layer parameter CORESETPoolIndex (i.e., a second PUSCH) requires power backoff. When indicating the backoff value, the quantization method in Table 1 or Table 2 can be used, and the backoff value in Table 2 includes 0dB, and thus it also includes the situation where two PUSCHs do not need power backoff.

For another example, 4 bits are used for reporting, 2 bits of the MSB indicate which PUSCH requires power backoff, 2 bits of the LSB indicatea power backoff value for the PUSCH indicated by the 2 bits of the MSB (indicated according to Table 1 or Table 2), and the 2 bits of the MSB can indicate at least one of the following states:
performing power backoff on the first PUSCH;
performing power backoff on the second PUSCH;
no power backoff is performed on the first PUSCH and the second PUSCH;
reserved.

When the 2 bits of the MSB indicate not performing power backoff or reservation for the first PUSCH and the second PUSCH, the gNB can ignore the 2-bit signaling content of the LSB, that is, the 2-bit backoff value of the LSB has no practical meaning.

For another example, the 2 bits of the MSB indicate which PUSCH's power is to be backed off through bit mapping. The 2 bits of the MSB respectively indicate whether to perform power backoff on the first PUSCH and whether to perform power backoff on the second PUSCH. For example, if an indication value is 0, it means no power backoff is performed, and if the indication value is 1, it means power backoff is performed; or, if the indication value is 1, it means no power backoff is performed, and if the indication value is 0, it means power backoff is performed. When using fixed bits for power backoff reporting, the 2 bits of the MSB will not indicate that two PUSCHs are to perform power backoff at the same time. When using a variable number of bits for power backoff reporting, if the 2 bits of the MSB indicate that neither of the two PUSCHs requires power backoff, only 2 bits are used for power backoff reporting, i.e., no other bits are required to indicate the power backoff value; if the 2 bits of the MSB indicate that one PUSCH requires power backoff, 4 bits are used for power backoff reporting, and the 2 bits of the LSB are used to indicate the power backoff value of the PUSCH that requires power backoff; if the 2 bits of the MSB indicate that both of the two PUSCHs require power backoff, 6 bits are used for power backoff reporting, and the 4 bits of the LSB indicate the power backoff values of the two PUSCHs respectively. The correspondence between these 4 bits and PUSCH can refer to the method for reporting the specific power backoff amount of each PUSCH in option 2-1.

The above embodiments all assume that 2 bits are used to report the power backoff value. When 3 bits or more (such as N bits) are used to report the power backoff value, the 2 bits or 4 bits of the LSB need to be replaced with N bits or 2N bits.

When the total power exceeds the limit, it is also necessary to define which PUSCH's power is to be backed off. The following factors can be used to determine which PUSCH's power is to be backed off: duration, scheduling power, whether power backoff is due to MPE requirement, PH size, etc. For example, the power of PUSCH with a longer duration is backed off first; the power of PUSCH with a higher gNB power control power value (which is a power value calculated by the power control parameter associated with the TCI state) is backed off first; if a PUSCH needs to be backed off due to MPE requirement, the PUSCH is backed off first; the power of PUSCH with a smaller PH (such as a negative PH value) is backed off first.

In all embodiments of the present disclosure, PUSCH may also be replaced by uplink channels such as PUCCH, SRS, Physical Random Access Channel (PRACH), and a PHR reporting process or power backoff process is similar to that of PUSCH, which will not be described in detail here.

In summary, the embodiments of the present disclosure propose a power backoff value reporting method suitable for scenarios where multiple target transmissions or transmissions corresponding to multiple first parameters are transmitted simultaneously. Through the power backoff value reporting method, the network side determines whether the current power allocation mode exceeds the UE power limit, and then the network side appropriately adjusts the power control parameters according to the UE's reporting to make more effective use of the UE's transmit power.

As shown in FIG. 9, one embodiment of the present disclosure further provides a user equipment (UE), including a memory 920, a transceiver 910 and a processor 900.

The memory 920 is used to store a computer program. The transceiver 910 is used to send and receive data under the control of the processor 900. The processor 900 is used to read the computer program in the memory 920 and perform the following operations:
reporting a PHR; where the PHR includes: N1 power headroom (PH) fields, and N2 maximum power (Pcmax) field(s), N1 is an integer greater than or equal to 2, and N2 is an integer greater than or equal to 1.

Each PH field is used to indicate a power headroom of corresponding target transmission; N2 Pcmax fields are used to indicate maximum transmission powers corresponding to different target transmissions or different first parameters.

The target transmission includes at least one of the following: physical uplink shared channel (PUSCH), or physical uplink control channel (PUCCH), or sounding reference signal (SRS).

The first parameter includes: sounding reference signal (SRS) resource set (SRS resource set), or transmission configuration indication (TCI) state, or related higher layer parameter of a control resource set (CORESET).

In an optional embodiment of the present disclosure, when N2 is greater than or equal to 2 as well as N2 is equal to N1, each of the Pcmax fields is used to explicitly indicate maximum transmit powers corresponding to different target transmissions or different first parameters.

The PH fields are associated with the Pcmax fields in a one-to-one manner; a PH value of each PH field is determined by a power value of the Pcmax field corresponding to the PH field.

As an optional embodiment, the processor is further configured to read the computer program in the memory and perform the following operations:
determining an association relationship between the PH field and the Pcmax field according to a predefined association relationship;
   or,
determining an association relationship between the PH field and the Pcmax field according to the first parameter.

As an optional embodiment, the processor is further configured to read the computer program in the memory and perform the following operations:
determining the association relationship between the PH field and the Pcmax field according to an association relationship between the PH field and the first parameter as well as an association relationship between the first parameter and the Pcmax field;
   or,
determining the association relationship between the PH field and the Pcmax field according to an association relationship between the PH field and the first parameter, an association relationship between the Pcmax field and the second parameter as well as an association relationship between the first parameter and the second parameter; where the second parameter includes: SRS resource set, or TCI state, or related higher layer parameter of CORESET.

In another optional embodiment of the present disclosure, when N2 is greater than or equal to 2 and N2 is equal to N1, the N2 Pcmax fields include: one first Pcmax field and (N2-1) second Pcmax fields; the first Pcmax field is used to indicate a maximum transmit power of the terminal, and each of the second Pcmax fields is used to explicitly indicate maximum transmit powers corresponding to different target transmissions or different first parameters.

The (N2-1) second Pcmax fields are associated with the (N2-1) PH fields in a one-to-one manner, and a PH value of each PH field is determined by a power value of the second Pcmax field corresponding to the PH field and/or a power value of the first Pcmax field.

In an optional embodiment of the present disclosure, when N2 is equal to 1, one Pcmax field is used to indicate a maximum transmit power of the terminal.

The PH value of each PH field is determined by the power value of the Pcmax field and a power factor corresponding to the PH field.

As an optional embodiment, the power factor corresponding to the PH field is associated with the first parameter corresponding to the PH field.

Alternatively, the power factor is a predefined value.

Alternatively, the PHR carries the power factor.

As an optional embodiment, if the PHR carries the power factor, the processor is further configured to read the computer program in the memory and perform the following operations:
in case that a change of the power factor is greater than a first threshold, triggering reporting of the PHR.

In an optional embodiment of the present disclosure, when N2 is equal to 1, one Pcmax field is used to indicate a maximum transmit power corresponding to different target transmissions or different first parameters; the different target transmissions or different first parameters correspond to the same maximum transmit power.

The maximum transmit power indicated by the Pcmax field does not include a power backoff value.

As an optional embodiment, the PHR further includes: a maximum permissible exposure (MPE) field and a first information field indicating association between the MPE field and the PH field.

The PH value of the PH field associated with the MPE field is related to the value of the MPE field.

In FIG. 9, a bus architecture may include any number of interconnected bus and bridge. Specifically, various circuits of one or more processors, which are represented by the processor 900, and one or more memories, which are represented by the memory 920, are linked together. The bus architecture may link various other circuits, such as a peripheral device, voltage regulator and a power management circuit together. These features are well known in this field; therefore, the present disclosure does not make further description on these features. The bus interface provides an interface. The transceiver 910 may be multiple elements, including a transmitter and a receiver and provide units, which communicate with other devices on the transmission medium. The transmission medium includes transmission media such as wireless channels, wired channels, and optical cables. For different UEs, the bus interface may be an interface that can be connected to external or internal devices. The connected devices include but are not limited to a small keyboard, a display, a speaker, a microphone, a joystick, etc.

The processor 900 is responsible for managing the bus architecture and the normal processing. The memory 920 may be used to store data used by the processor 900 for performing operations.

Optionally, the processor 900 may be a central processing unit (CPU), an application specific integrated circuit (ASIC), a field-programmable gate array (FPGA) or a complex programmable logic device (CPLD). The processor may also adopt multi-core architecture.

The processor calls the computer program stored in the memory to execute any of the methods provided by the embodiments of the present disclosure according to obtained executable instructions. The processor and the memory may also be arranged physically separately.

It is to be noted that the foregoing UE provided in the embodiments of the present disclosure can perform all the method steps performed in the foregoing method embodiments, and can achieve the same technical effect. The parts and beneficial effects in this embodiment that are the same as those in the method embodiment will not be described in detail here.

As shown in FIG. 10, one embodiment of the present disclosure further provides a power headroom report (PHR) reporting device, the device including:
a first reporting unit 1001 used to report a PHR; where the PHR includes: N1 power headroom (PH) fields, and N2 maximum power (Pcmax) field(s), N1 is an integer greater than or equal to 2, and N2 is an integer greater than or equal to 1.

Each PH field is used to indicate a power headroom of corresponding target transmission; N2 Pcmax fields are used to indicate maximum transmission powers corresponding to different target transmissions or different first parameters.

The target transmission includes at least one of the following: physical uplink shared channel (PUSCH), or physical uplink control channel (PUCCH), or sounding reference signal (SRS).

The first parameter includes: sounding reference signal (SRS) resource set (SRS resource set), or transmission configuration indication (TCI) state, or related higher layer parameter of a control resource set (CORESET).

Optionally, when N2 is greater than or equal to 2 as well as N2 is equal to N1, each of the Pcmax fields is used to explicitly indicate maximum transmit powers corresponding to different target transmissions or different first parameters.

The PH fields are associated with the Pcmax fields in a one-to-one manner; a PH value of each PH field is determined by a power value of the Pcmax field corresponding to the PH field.

Optionally, the device further includes:
a first determining unit used to determine an association relationship between the PH field and the Pcmax field according to a predefined association relationship;
a second determining unit used to determine an association relationship between the PH field and the Pcmax field according to the first parameter.

Optionally, the second determining unit is used to:
determine the association relationship between the PH field and the Pcmax field according to an association relationship between the PH field and the first parameter as well as an association relationship between the first parameter and the Pcmax field;
   or,
determine the association relationship between the PH field and the Pcmax field according to an association relationship between the PH field and the first parameter, an association relationship between the Pcmax field and the second parameter as well as an association relationship between the first parameter and the second parameter; where the second parameter includes: SRS resource set, or TCI state, or related higher layer parameter of CORESET.

Optionally, when N2 is greater than or equal to 2 and N2 is equal to N1, the N2 Pcmax fields include: one first Pcmax field and (N2-1) second Pcmax fields; the first Pcmax field is used to indicate a maximum transmit power of the terminal, and each of the second Pcmax fields is used to explicitly indicate maximum transmit powers corresponding to different target transmissions or different first parameters.

The (N2-1) second Pcmax fields are associated with the (N2-1) PH fields in a one-to-one manner, and a PH value of each PH field is determined by a power value of the second Pcmax field corresponding to the PH field and/or a power value of the first Pcmax field.

Optionally, when N2 is equal to 1, one Pcmax field is used to indicate a maximum transmit power of the terminal.

The PH value of each PH field is determined by the power value of the Pcmax field and a power factor corresponding to the PH field.

Optionally, the power factor corresponding to the PH field is associated with the first parameter corresponding to the PH field.

Alternatively, the power factor is a predefined value.

Alternatively, the PHR carries the power factor.

Optionally, the device further includes:
a triggering unit used to, in case that a change of the power factor is greater than a first threshold, trigger reporting of the PHR.

Optionally, when N2 is equal to 1, one Pcmax field is used to indicate a maximum transmit power corresponding to different target transmissions or different first parameters; the different target transmissions or different first parameters correspond to the same maximum transmit power.

The maximum transmit power indicated by the Pcmax field does not include a power backoff value.

Optionally, the PHR further includes: a maximum permissible exposure (MPE) field and a first information field indicating association between the MPE field and the PH field.

The PH value of the PH field associated with the MPE field is related to the value of the MPE field.

It is to be noted that the foregoing device provided in the embodiments of the present disclosure can perform all the method steps performed in the foregoing method embodiments, and can achieve the same technical effect. The parts and beneficial effects in this embodiment that are the same as those in the method embodiment will not be described in detail here.

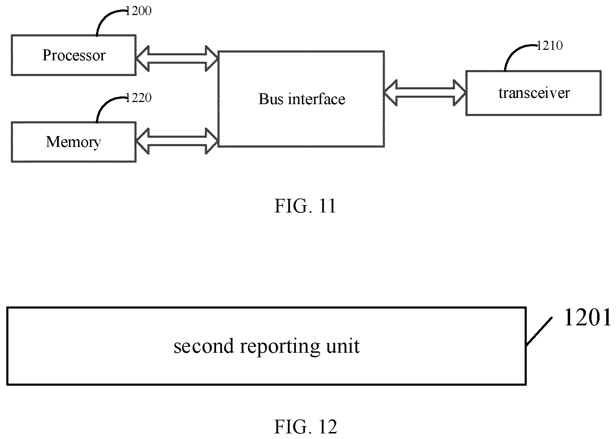

As shown in FIG. 11, one embodiment of the present disclosure further provides a user equipment (UE), including a memory 1220, a transceiver 1210, and a processor 1200.

The memory 1220 is used to store a computer program. The transceiver 1210 is used to send and receive data under the control of the processor 1200. The processor 1200 is used to read the computer program in the memory and perform the following operations:
reporting a media access control control element (MAC CE) or uplink control information (UCI), where the MAC CE or UCI carries a power backoff value caused by exceeding a maximum transmit power limit corresponding to a target transmission or a first parameter.

The target transmission includes at least one of the following: a physical uplink shared channel (PUSCH), or a physical uplink control channel (PUCCH), or a sounding reference signal (SRS).

The first parameter includes at least one of the following: a sounding reference signal (SRS) resource set (SRS resource set), or a transmission configuration indication (TCI) state, or a related higher layer parameter of a control resource set CORESET.

In an optional embodiment of the present disclosure, the MAC CE includes a first identification bit and a second information field.

The first identification bit is used to identify the target transmission or the first parameter where power backoff occurs.

The second information field is used to indicate a power backoff value caused by exceeding the maximum transmit power limit corresponding to the target transmission or the first parameter.

In another optional embodiment of the present disclosure, the MAC CE includes:
multiple third information fields; where each third information field is used to indicate a power backoff value corresponding to a target transmission or a first parameter associated with the third information field.

In another optional embodiment of the present disclosure, the MAC CE further includes at least one of the following:
at least one fourth information field, where the fourth information field is used to indicate whether the third information field reports a power backoff value;
at least one fifth information field, where the fifth information field is used to indicate that a maximum transmit power causing power backoff is a maximum transmit power of the UE, or is used to indicate that a maximum transmit power causing power backoff is a maximum transmit power corresponding to the target transmission or the first parameter.

In another optional embodiment of the present disclosure, the MAC CE includes an MPE field, and the MPE field is used to carry the power backoff value.

In another optional embodiment of the present disclosure, the MAC CE further includes:
a second identification bit used to indicate a cause for the power backoff report.

In an optional embodiment of the present disclosure, the cause of the power backoff reporting indicated by the second identification includes at least one of the following:
reporting of the backoff value caused only by MPE requirements, not due to power limits;
reporting of the backoff value caused only by power limits, not due to MPE requirements;
reporting of the backoff value caused by power limit and MPE requirements;
reporting of the backoff value not due to MPE requirements and not due to power limits.

As an optional embodiment, when the MPE field indicates that the power backoff value is a power backoff value caused by the maximum power limit and the MPE requirement, the power backoff value indicated by the MPE field includes at least one of the following:
power management maximum power backoff value P-MPR;
power backoff value L-MPR caused by exceeding the maximum transmit power limit;
a sum of P-MPR and L-MPR;
a maximum value of P-MPR and L-MPR.

In an optional embodiment of the present disclosure, the UCI includes: a power backoff value for each PUSCH; wherein the method further includes:
according to a predefined rule, determining a corresponding relationship between each power backoff value carried by the UCI and the target transmission or the first parameter.

In an optional embodiment of the present disclosure, the UCI includes: a first valid bit and a second valid bit.

The first valid bit is used to indicate a target transmission or a first parameter for power backoff; the second valid bit is used to indicate the power backoff value.

Optionally, the first valid bit indicates the target transmission or first parameter for power backoff by means of joint coding or bit mapping.

Optionally, the payload of the UCI is variable; and the processor is further used to read the computer program in the memory and perform the following operations:
determining the number of bits of the second valid bit according to the number of target transmissions or first parameters for power backoff indicated by the first valid bit.

In FIG. 11, a bus architecture may include any number of interconnected bus and bridge. Specifically, various circuits of one or more processors, which are represented by the processor 1200, and one or more memories, which are represented by the memory, are linked together. The bus architecture may link various other circuits, such as a peripheral device, voltage regulator and a power management circuit together. These features are well known in this field; therefore, the present disclosure does not make further description on these features. The bus interface provides an interface. The transceiver 1210 may be multiple elements, including a transmitter and a receiver and provide units, which communicate with other devices on the transmission medium. The transmission medium includes transmission media such as wireless channels, wired channels, and optical cables. For different UEs, the bus interface may be an interface that can be connected to external or internal devices. The connected devices include but are not limited to a small keyboard, a display, a speaker, a microphone, a joystick, etc.

The processor 1200 is responsible for managing the bus architecture and the normal processing. The memory 1220 may be used to store data used by the processor 1200 for performing operations.

Optionally, the processor 1200 may be a central processing unit (CPU), an application specific integrated circuit (ASIC), a field-programmable gate array (FPGA) or a complex programmable logic device (CPLD). The processor may also adopt multi-core architecture.

The processor calls the computer program stored in the memory to execute any of the methods provided by the embodiments of the present disclosure according to obtained executable instructions. The processor and the memory may also be arranged physically separately.

It is to be noted that the foregoing UE provided in the embodiments of the present disclosure can perform all the method steps performed in the foregoing method embodiments, and can achieve the same technical effect. The parts and beneficial effects in this embodiment that are the same as those in the method embodiment will not be described in detail here.

As shown in FIG. 12, one embodiment of the present disclosure further provides a power backoff value reporting device, the device including:
a second reporting unit 1201 used to report a media access control control element (MAC CE) or uplink control information (UCI), where the MAC CE or UCI carries a power backoff value caused by exceeding a maximum transmit power limit corresponding to a target transmission or a first parameter.

The target transmission includes at least one of the following: a physical uplink shared channel (PUSCH), or a physical uplink control channel (PUCCH), or a sounding reference signal (SRS).

The first parameter includes at least one of the following: a sounding reference signal (SRS) resource set (SRS resource set), or a transmission configuration indication (TCI) state, or a related higher layer parameter of a control resource set CORESET.

In an optional embodiment of the present disclosure, the MAC CE includes a first identification bit and a second information field.

The first identification bit is used to identify the target transmission or the first parameter where power backoff occurs.

The second information field is used to indicate a power backoff value caused by exceeding the maximum transmit power limit corresponding to the target transmission or the first parameter.

In another optional embodiment of the present disclosure, the MAC CE includes:
multiple third information fields; where each third information field is used to indicate a power backoff value corresponding to a target transmission or a first parameter associated with the third information field.

In another optional embodiment of the present disclosure, the MAC CE further includes at least one of the following:
at least one fourth information field, where the fourth information field is used to indicate whether the third information field reports a power backoff value;
at least one fifth information field, where the fifth information field is used to indicate that a maximum transmit power causing power backoff is a maximum transmit power of the UE, or is used to indicate that a maximum transmit power causing power backoff is a maximum transmit power corresponding to the target transmission or the first parameter.

In another optional embodiment of the present disclosure, the MAC CE includes an MPE field, and the MPE field is used to carry the power backoff value.

In another optional embodiment of the present disclosure, the MAC CE further includes:
a second identification bit used to indicate a cause for the power backoff report.

In an optional embodiment of the present disclosure, the cause of the power backoff reporting indicated by the second identification includes at least one of the following:
reporting of the backoff value caused only by MPE requirements, not due to power limits;
reporting of the backoff value caused only by power limits, not due to MPE requirements;
reporting of the backoff value caused by power limit and MPE requirements;
reporting of the backoff value not due to MPE requirements and not due to power limits.

As an optional embodiment, when the MPE field indicates that the power backoff value is a power backoff value caused by the maximum power limit and the MPE requirement, the power backoff value indicated by the MPE field includes at least one of the following:
power management maximum power backoff value P-MPR;
power backoff value L-MPR caused by exceeding the maximum transmit power limit;
a sum of P-MPR and L-MPR;
a maximum value of P-MPR and L-MPR.

In an optional embodiment of the present disclosure, the UCI includes: a power backoff value for each PUSCH; wherein the device further includes:
a third determining unit used to, according to a predefined rule, determine a corresponding relationship between each power backoff value carried by the UCI and the target transmission or the first parameter.

In an optional embodiment of the present disclosure, the UCI includes: a first valid bit and a second valid bit.

The first valid bit is used to indicate a target transmission or a first parameter for power backoff; the second valid bit is used to indicate the power backoff value.

Optionally, the first valid bit indicates the target transmission or first parameter for power backoff by means of joint coding or bit mapping.

Optionally, the payload of the UCI is variable; and the device further includes:
a fourth determining unit used to determine the number of bits of the second valid bit according to the number of target transmissions or first parameters for power backoff indicated by the first valid bit.

It is to be noted that the foregoing device provided in the embodiments of the present disclosure can perform all the method steps performed in the foregoing method embodiments, and can achieve the same technical effect. The parts and beneficial effects in this embodiment that are the same as those in the method embodiment will not be described in detail here.

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

One embodiment of the present disclosure further provides a processor-readable storage medium, which includes program instructions stored thereon. The computer program is used to cause a processor to perform steps of the above method embodiments. The processor-readable storage medium may be any available medium or data storage device that the processor may access, including but not limited to a magnetic memory (such as a floppy disk, a hard disk, a magnetic tape, a magneto-optical disk (MO), etc.), an optical memory (such as a compact disk (CD), a digital versatile disc (DVD), a Blu-ray disc (BD), a high-definition versatile disc (HVD), etc.), or a semiconductor memory (such as a ROM, an erasable programmable read-only memory (EPROM), an electrically erasable programmable read-only memory (EEPROM), a non-volatile memory (NAND FLASH), a solid state disk or solid state driver (SSD)).

A person skilled in the art should understand that the embodiments of this application may be provided as methods, systems, or computer program products. Therefore, this application may adopt the form of complete hardware embodiments, complete software embodiments, or embodiments combining software and hardware aspects. Moreover, this application may adopt the form of a computer program product implemented on one or more computer available storage media (including but not limited to a disk storage, an optical storage, etc.) containing computer available program code.

This application is described with reference to flowcharts and/or block diagrams of methods, devices (systems), and computer program products according to the embodiments of this application. It should be understood that each process and/or block in the flowchart and/or block diagram, and the combination of processes and/or blocks in the flowchart and/or block diagram may be implemented by computer executable instructions. These computer executable instructions may be provided to a general-purpose computer, a special-purpose computer, an embedded processor, or a processor of other programmable data processing device to generate a machine, so that a device, which is configured to implement functions specified in one process or multiple processes in the flowchart and/or one block or multiple blocks in the block diagram, is generated through the instructions executed by the computer or the processor of other programmable data processing device.

These processor executable instructions may be stored in a processor readable memory that may guide a computer or other programmable data processing device to operate in a specific manner, so that the instructions stored in the processor readable memory generate a product including an instruction device. The instruction device implements the functions specified in one process or multiple processes in the flowchart and/or one block or multiple blocks in the block diagram.

These processor executable instructions may be loaded in a computer or other programmable data processing device, to enable a series of operation steps to be executed on the computer or other programmable equipment to realize computer-implemented processing, so that the instructions executed on the computer or other programmable device provide steps for implementing functions specified in a process or multiple processes in the flowchart and/or a block or multiple blocks in the block diagram.

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, a determining module may be a separate processing element, or may be integrated into a certain chip of the above device, or, may be stored in the memory of the above device in the form of program code, and a certain processing element of the above device may call and execute the functions of the determination module. Other modules have similar implementations. In addition, all or part of these modules may be integrated together, and may be implemented independently. The processing element mentioned herein may be an integrated circuit with signal processing capability. In the implementation process, the various steps of the above method or the above various modules may be implemented by an integrated logic circuit in hardware form in elements of a processor or implemented by instructions in the form of software.

For example, the various modules, units, subunits or submodules may be one or more integrated circuits used to implement the above methods, such as one or more application specific integrated circuits (Application Specific Integrated Circuit, ASIC), or one or more microprocessors (Digital Signal Processor, DSP), or one or more field programmable gate arrays (Field Programmable Gate Array, FPGA), etc. As another example, when a module described above is implemented in the form of scheduling program codes by a processing element, the processing element may be a general purpose processor, such as a central processing unit (Central Processing Unit, CPU) or other processors that may call program codes. As another example, these modules may be integrated together and implemented as a system-on-a-chip (system-on-a-chip, SOC).

Terms such as "first" and "second" in the specification and the claims of the present application are used to distinguish similar objects and are not necessarily used to describe a specific order or sequence. It should be understood that the terms used in this way may be interchanged under appropriate circumstances, so that the embodiments of the present application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device. Moreover, the term "and/or" used in the specification and the claims indicates involving at least one of connected objects, for example, A and/or B and/or C means 7 situations, including: A alone, B alone, C alone, both A and B, both B and C, both A and C, and all of A, B and C. Similarly, the use of "at least one of A and B" in this specification and claims should be understood as "A alone, B alone, or both A and B".

Obviously, those skilled in the art can make various changes and modifications to the present application without departing from the spirit and scope of the present application. Thus, if these modifications and variations of the present application fall within the scope of the claims of the present application and equivalent technologies thereof, the present application also intends to include these modifications and variations.

## Claims

1. A power headroom report (PHR) reporting method, comprising:
reporting, by a user equipment (UE), a PHR; wherein the PHR includes: N1 power headroom (PH) fields, and N2 maximum power (Pcmax) field(s), N1 is an integer greater than or equal to 2, and N2 is an integer greater than or equal to 1;
wherein each PH field is used to indicate a power headroom of corresponding target transmission; the N2 Pcmax fields are used to indicate maximum transmission powers corresponding to different target transmissions or different first parameters;
wherein the target transmission includes at least one of the following: physical uplink shared channel (PUSCH), or physical uplink control channel (PUCCH), or sounding reference signal (SRS);
the first parameter includes at least one of the following: sounding reference signal (SRS) resource set (SRS resource set), or transmission configuration indication (TCI) state, or related higher layer parameter of a control resource set (CORESET).

2. The method according to claim 1, wherein when N2 is greater than or equal to 2 as well as N2 is equal to N1, each of the Pcmax fields is used to indicate maximum transmit powers corresponding to different target transmissions or different first parameters;
wherein the PH fields are associated with the Pcmax fields in a one-to-one manner; a PH value of each PH field is determined by a power value of the Pcmax field corresponding to the PH field.

3. The method according to claim 2, wherein the method further includes:
determining an association relationship between one PH field and one Pcmax field according to a predefined association relationship; or,
determining an association relationship between one PH field and one Pcmax field according to the first parameter.

4. The method according to claim 3, wherein the determining an association relationship between one PH field and one Pcmax field according to the first parameter, includes:
determining the association relationship between the PH field and the Pcmax field according to an association relationship between the PH field and the first parameter as well as an association relationship between the first parameter and the Pcmax field;
or,
determining the association relationship between the PH field and the Pcmax field according to an association relationship between the PH field and the first parameter, an association relationship between the Pcmax field and the second parameter as well as an association relationship between the first parameter and the second parameter; wherein the second parameter includes: SRS resource set, or TCI state, or related higher layer parameter of CORESET.

5. The method according to claim 1, wherein when N2 is greater than or equal to 2 and N2 is equal to N1, the N2 Pcmax fields include: one first Pcmax field and (N2-1) second Pcmax fields; the first Pcmax field is used to indicate a maximum transmit power of the UE, and each of the second Pcmax fields is used to indicate maximum transmit powers corresponding to different target transmissions or different first parameters;
the (N2-1) second Pcmax fields are associated with (N2-1) PH fields in a one-to-one manner, and a PH value of each PH field is determined by a power value of the second Pcmax field corresponding to the PH field and/or a power value of the first Pcmax field.

6. The method according to claim 1, wherein when N2 is equal to 1, one Pcmax field is used to indicate a maximum transmit power of the UE;
the PH value of each PH field is determined by a power value of the Pcmax field and a power factor corresponding to the PH field.

7. The method according to claim 6, wherein the power factor corresponding to the PH field is associated with the first parameter corresponding to the PH field;
or, the power factor is a predefined value;
or, the PHR carries the power factor.

8. The method according to claim 7, wherein if the PHR carries the power factor, the method further includes:
in case that a change of the power factor is greater than a first threshold, triggering reporting of the PHR.

9. The method according to claim 1, wherein when N2 is equal to 1, one Pcmax field is used to indicate a maximum transmit power corresponding to different target transmissions or different first parameters; the different target transmissions or different first parameters correspond to the same maximum transmit power;
the maximum transmit power indicated by the Pcmax field does not include a power backoff value.

10. The method according to claim 9, wherein the PHR further includes: a maximum permissible exposure (MPE) field and a first information field indicating association between the MPE field and the PH field;
the PH value of the PH field associated with the MPE field is related to the value of the MPE field.

11. A power backoff value reporting method, comprising:
reporting, by a user equipment (UE), a media access control control element (MAC CE) or uplink control information (UCI), wherein the MAC CE or UCI carries a power backoff value caused by exceeding a maximum transmit power limit corresponding to a target transmission or a first parameter;
wherein the target transmission includes at least one of the following: a physical uplink shared channel (PUSCH), or a physical uplink control channel (PUCCH), or a sounding reference signal (SRS);
the first parameter includes at least one of the following: a sounding reference signal (SRS) resource set (SRS resource set), or a transmission configuration indication (TCI) state, or a related higher layer parameter of a control resource set CORESET.

12. The method according to claim 11, wherein the MAC CE includes a first identification bit and a second information field;
the first identification bit is used to identify the target transmission or the first parameter where power backoff occurs;
the second information field is used to indicate a power backoff value caused by exceeding the maximum transmit power limit corresponding to the target transmission or the first parameter.

13. The method according to claim 11, wherein the MAC CE includes:
multiple third information fields; wherein each third information field is used to indicate a power backoff value corresponding to a target transmission or a first parameter associated with the third information field.

14. The method according to claim 13, wherein the MAC CE further includes at least one of the following:
at least one fourth information field, wherein the fourth information field is used to indicate whether the third information field reports a power backoff value;
at least one fifth information field, wherein the fifth information field is used to indicate that a maximum transmit power causing power backoff is a maximum transmit power of the UE, or is used to indicate that a maximum transmit power causing power backoff is a maximum transmit power corresponding to the target transmission or the first parameter.

15. The method according to claim 11, wherein the MAC CE includes an MPE field, and the MPE field is used to carry the power backoff value.

16. The method according to claim 15, wherein the MAC CE further includes:
a second identification bit used to indicate a cause for the power backoff report.

17. The method according to claim 16, wherein the cause of the power backoff reporting indicated by the second identification includes at least one of the following:
reporting of the backoff value caused only by MPE requirements, not due to power limits;
reporting of the backoff value caused only by power limits, not due to MPE requirements;
reporting of the backoff value caused by power limit and MPE requirements;
reporting of the backoff value not due to MPE requirements and not due to power limits; which can also be used as a reserved bit.

18. The method according to claim 15, wherein when the MPE field indicates that the power backoff value is a power backoff value caused by the maximum power limit and the MPE requirement, the power backoff value indicated by the MPE field includes at least one of the following:
power management maximum power backoff value P-MPR;
power backoff value L-MPR caused by exceeding the maximum transmit power limit;
a sum of P-MPR and L-MPR;
a maximum value of P-MPR and L-MPR.

19. The method according to claim 11, wherein the UCI includes: a power backoff value for each PUSCH; wherein the method further includes:
according to a predefined rule, determining a corresponding relationship between each power backoff value carried by the UCI and the target transmission or the first parameter.

20. The method according to claim 11, wherein the UCI includes: a first valid bit and a second valid bit;
the first valid bit is used to indicate a target transmission or a first parameter for power backoff; the second valid bit is used to indicate the power backoff value.

21. The method according to claim 20, wherein the first valid bit indicates the target transmission or first parameter for power backoff by means of joint coding or bit mapping.

22. The method according to claim 20, wherein the payload of the UCI is variable; and the method further includes:
determining the number of bits of the second valid bit according to the number of target transmissions or first parameters for power backoff indicated by the first valid bit.

23. A user equipment (UE), comprising: a memory, a transceiver, and a processor;
wherein the memory is used to store a computer program; the transceiver is used to send and receive data under control of the processor; and the processor is used to read the computer program in the memory and perform the following operations:
reporting a PHR; wherein the PHR includes: N1 power headroom (PH) fields, and N2 maximum power (Pcmax) field(s), N1 is an integer greater than or equal to 2, and N2 is an integer greater than or equal to 1;
wherein each PH field is used to indicate a power headroom of corresponding target transmission; the N2 Pcmax fields are used to indicate maximum transmission powers corresponding to different target transmissions or different first parameters;
wherein the target transmission includes at least one of the following: physical uplink shared channel (PUSCH), or physical uplink control channel (PUCCH), or sounding reference signal (SRS);
the first parameter includes at least one of the following: sounding reference signal (SRS) resource set (SRS resource set), or transmission configuration indication (TCI) state, or related higher layer parameter of a control resource set (CORESET).

24. The UE according to claim 23, wherein when N2 is greater than or equal to 2 as well as N2 is equal to N1, each of the Pcmax fields is used to indicate maximum transmit powers corresponding to different target transmissions or different first parameters;
wherein the PH fields are associated with the Pcmax fields in a one-to-one manner; a PH value of each PH field is determined by a power value of the Pcmax field corresponding to the PH field.

25. The UE according to claim 24, wherein the processor is used to read the computer program in the memory and perform the following operations:
determining an association relationship between one PH field and one Pcmax field according to a predefined association relationship; or,
determining an association relationship between one PH field and one Pcmax field according to the first parameter.

26. The UE according to claim 25, wherein the processor is used to read the computer program in the memory and perform the following operations:
determining the association relationship between the PH field and the Pcmax field according to an association relationship between the PH field and the first parameter as well as an association relationship between the first parameter and the Pcmax field;
or,
determining the association relationship between the PH field and the Pcmax field according to an association relationship between the PH field and the first parameter, an association relationship between the Pcmax field and the second parameter as well as an association relationship between the first parameter and the second parameter; wherein the second parameter includes: SRS resource set, or TCI state, or related higher layer parameter of CORESET.

27. The UE according to claim 23, wherein when N2 is greater than or equal to 2 and N2 is equal to N1, the N2 Pcmax fields include: one first Pcmax field and (N2-1) second Pcmax fields; the first Pcmax field is used to indicate a maximum transmit power of the UE, and each of the second Pcmax fields is used to indicate maximum transmit powers corresponding to different target transmissions or different first parameters;
the (N2-1) second Pcmax fields are associated with (N2-1) PH fields in a one-to-one manner, and a PH value of each PH field is determined by a power value of the second Pcmax field corresponding to the PH field and/or a power value of the first Pcmax field.

28. The UE according to claim 23, wherein when N2 is equal to 1, one Pcmax field is used to indicate a maximum transmit power of the UE;
the PH value of each PH field is determined by a power value of the Pcmax field and a power factor corresponding to the PH field.

29. The UE according to claim 28, wherein the power factor corresponding to the PH field is associated with the first parameter corresponding to the PH field;
or, the power factor is a predefined value;
or, the PHR carries the power factor.

30. The UE according to claim 29, wherein if the PHR carries the power factor, the processor is used to read the computer program in the memory and perform the following operations:
in case that a change of the power factor is greater than a first threshold, triggering reporting of the PHR.

31. The UE according to claim 23, wherein when N2 is equal to 1, one Pcmax field is used to indicate a maximum transmit power corresponding to different target transmissions or different first parameters; the different target transmissions or different first parameters correspond to the same maximum transmit power;
the maximum transmit power indicated by the Pcmax field does not include a power backoff value.

32. The UE according to claim 31, wherein the PHR further includes: a maximum permissible exposure (MPE) field and a first information field indicating association between the MPE field and the PH field;
the PH value of the PH field associated with the MPE field is related to the value of the MPE field.

33. A power headroom report (PHR) reporting device, comprising
a first reporting unit used to report a PHR; wherein the PHR includes: N1 power headroom (PH) fields, and N2 maximum power (Pcmax) field(s), N1 is an integer greater than or equal to 2, and N2 is an integer greater than or equal to 1;
wherein each PH field is used to indicate a power headroom of corresponding target transmission; the N2 Pcmax fields are used to indicate maximum transmission powers corresponding to different target transmissions or different first parameters;
wherein the target transmission includes at least one of the following: physical uplink shared channel (PUSCH), or physical uplink control channel (PUCCH), or sounding reference signal (SRS);
the first parameter includes at least one of the following: sounding reference signal (SRS) resource set (SRS resource set), or transmission configuration indication (TCI) state, or related higher layer parameter of a control resource set (CORESET).

34. The device according to claim 33, wherein when N2 is greater than or equal to 2 as well as N2 is equal to N1, each of the Pcmax fields is used to indicate maximum transmit powers corresponding to different target transmissions or different first parameters;
wherein the PH fields are associated with the Pcmax fields in a one-to-one manner; a PH value of each PH field is determined by a power value of the Pcmax field corresponding to the PH field.

35. The device according to claim 34, wherein the device further includes:
a first determining unit used to determine an association relationship between one PH field and one Pcmax field according to a predefined association relationship;
a second determining unit used to determine an association relationship between one PH field and one Pcmax field according to the first parameter.

36. The device according to claim 35, wherein the second determining unit is used to:
determine the association relationship between the PH field and the Pcmax field according to an association relationship between the PH field and the first parameter as well as an association relationship between the first parameter and the Pcmax field;
or,
determine the association relationship between the PH field and the Pcmax field according to an association relationship between the PH field and the first parameter, an association relationship between the Pcmax field and the second parameter as well as an association relationship between the first parameter and the second parameter; wherein the second parameter includes: SRS resource set, or TCI state, or related higher layer parameter of CORESET.

37. The device according to claim 33, wherein when N2 is greater than or equal to 2 and N2 is equal to N1, the N2 Pcmax fields include: one first Pcmax field and (N2-1) second Pcmax fields; the first Pcmax field is used to indicate a maximum transmit power of the UE, and each of the second Pcmax fields is used to indicate maximum transmit powers corresponding to different target transmissions or different first parameters;
the (N2-1) second Pcmax fields are associated with (N2-1) PH fields in a one-to-one manner, and a PH value of each PH field is determined by a power value of the second Pcmax field corresponding to the PH field and/or a power value of the first Pcmax field.

38. The device according to claim 33, wherein when N2 is equal to 1, one Pcmax field is used to indicate a maximum transmit power of the UE;
the PH value of each PH field is determined by a power value of the Pcmax field and a power factor corresponding to the PH field.

39. The device according to claim 38, wherein the power factor corresponding to the PH field is associated with the first parameter corresponding to the PH field;
or, the power factor is a predefined value;
or, the PHR carries the power factor.

40. The device according to claim 39, wherein the device further includes:
a triggering unit used to, if the PHR carries the power factor, in case that a change of the power factor is greater than a first threshold, trigger reporting of the PHR.

41. The device according to claim 33, wherein when N2 is equal to 1, one Pcmax field is used to indicate a maximum transmit power corresponding to different target transmissions or different first parameters; the different target transmissions or different first parameters correspond to the same maximum transmit power;
the maximum transmit power indicated by the Pcmax field does not include a power backoff value.

42. The device according to claim 41, wherein the PHR further includes: a maximum permissible exposure (MPE) field and a first information field indicating association between the MPE field and the PH field;
the PH value of the PH field associated with the MPE field is related to the value of the MPE field.

43. A user equipment (UE), comprising: a memory, a transceiver, and a processor;
wherein the memory is used to store a computer program; the transceiver is used to send and receive data under control of the processor; and the processor is used to read the computer program in the memory and perform the following operations:
reporting a media access control control element (MAC CE) or uplink control information (UCI), wherein the MAC CE or UCI carries a power backoff value caused by exceeding a maximum transmit power limit corresponding to a target transmission or a first parameter;
wherein the target transmission includes at least one of the following: a physical uplink shared channel (PUSCH), or a physical uplink control channel (PUCCH), or a sounding reference signal (SRS);
the first parameter includes at least one of the following: a sounding reference signal (SRS) resource set (SRS resource set), or a transmission configuration indication (TCI) state, or a related higher layer parameter of a control resource set CORESET.

44. The UE according to claim 43, wherein the MAC CE includes a first identification bit and a second information field;
the first identification bit is used to identify the target transmission or the first parameter where power backoff occurs;
the second information field is used to indicate a power backoff value caused by exceeding the maximum transmit power limit corresponding to the target transmission or the first parameter.

45. The UE according to claim 43, wherein the MAC CE includes:
multiple third information fields; wherein each third information field is used to indicate a power backoff value corresponding to a target transmission or a first parameter associated with the third information field.

46. The UE according to claim 45, wherein the MAC CE further includes at least one of the following:
at least one fourth information field, wherein the fourth information field is used to indicate whether the third information field reports a power backoff value;
at least one fifth information field, wherein the fifth information field is used to indicate that a maximum transmit power causing power backoff is a maximum transmit power of the UE, or is used to indicate that a maximum transmit power causing power backoff is a maximum transmit power corresponding to the target transmission or the first parameter.

47. The UE according to claim 43, wherein the MAC CE includes an MPE field, and the MPE field is used to carry the power backoff value.

48. The UE according to claim 47, wherein the MAC CE further includes:
a second identification bit used to indicate a cause for the power backoff report.

49. The UE according to claim 48, wherein the cause of the power backoff reporting indicated by the second identification includes at least one of the following:
reporting of the backoff value caused only by MPE requirements, not due to power limits;
reporting of the backoff value caused only by power limits, not due to MPE requirements;
reporting of the backoff value caused by power limit and MPE requirements;
reporting of the backoff value not due to MPE requirements and not due to power limits; which can also be used as a reserved bit.

50. The UE according to claim 47, wherein when the MPE field indicates that the power backoff value is a power backoff value caused by the maximum power limit and the MPE requirement, the power backoff value indicated by the MPE field includes at least one of the following:
power management maximum power backoff value P-MPR;
power backoff value L-MPR caused by exceeding the maximum transmit power limit;
a sum of P-MPR and L-MPR;
a maximum value of P-MPR and L-MPR.

51. The UE according to claim 43, wherein the UCI includes: a power backoff value for each PUSCH; wherein the method further includes:
according to a predefined rule, determining a corresponding relationship between each power backoff value carried by the UCI and the target transmission or the first parameter.

52. The UE according to claim 43, wherein the UCI includes: a first valid bit and a second valid bit;
the first valid bit is used to indicate a target transmission or a first parameter for power backoff; the second valid bit is used to indicate the power backoff value.

53. The UE according to claim 52, wherein the first valid bit indicates the target transmission or first parameter for power backoff by means of joint coding or bit mapping.

54. The UE according to claim 52, wherein the payload of the UCI is variable; and the processor is used to read the computer program in the memory and perform the following operations:
determining the number of bits of the second valid bit according to the number of target transmissions or first parameters for power backoff indicated by the first valid bit.

55. A power backoff value reporting device, comprising:
a second reporting unit used to report a media access control control element (MAC CE) or uplink control information (UCI), wherein the MAC CE or UCI carries a power backoff value caused by exceeding a maximum transmit power limit corresponding to a target transmission or a first parameter;
wherein the target transmission includes at least one of the following: a physical uplink shared channel (PUSCH), or a physical uplink control channel (PUCCH), or a sounding reference signal (SRS);
the first parameter includes at least one of the following: a sounding reference signal (SRS) resource set (SRS resource set), or a transmission configuration indication (TCI) state, or a related higher layer parameter of a control resource set CORESET.

56. The device according to claim 55, wherein the MAC CE includes a first identification bit and a second information field;
the first identification bit is used to identify the target transmission or the first parameter where power backoff occurs;
the second information field is used to indicate a power backoff value caused by exceeding the maximum transmit power limit corresponding to the target transmission or the first parameter.

57. The device according to claim 55, wherein the MAC CE includes:
multiple third information fields; wherein each third information field is used to indicate a power backoff value corresponding to a target transmission or a first parameter associated with the third information field.

58. The device according to claim 57, wherein the MAC CE further includes at least one of the following:
at least one fourth information field, wherein the fourth information field is used to indicate whether the third information field reports a power backoff value;
at least one fifth information field, wherein the fifth information field is used to indicate that a maximum transmit power causing power backoff is a maximum transmit power of the UE, or is used to indicate that a maximum transmit power causing power backoff is a maximum transmit power corresponding to the target transmission or the first parameter.

59. The device according to claim 57, wherein the MAC CE includes an MPE field, and the MPE field is used to carry the power backoff value.

60. The device according to claim 60, wherein the MAC CE further includes:
a second identification bit used to indicate a cause for the power backoff report.

61. The device according to claim 60, wherein the cause of the power backoff reporting indicated by the second identification includes at least one of the following:
reporting of the backoff value caused only by MPE requirements, not due to power limits;
reporting of the backoff value caused only by power limits, not due to MPE requirements;
reporting of the backoff value caused by power limit and MPE requirements;
reporting of the backoff value not due to MPE requirements and not due to power limits; which can also be used as a reserved bit.

62. The device according to claim 60, wherein when the MPE field indicates that the power backoff value is a power backoff value caused by the maximum power limit and the MPE requirement, the power backoff value indicated by the MPE field includes at least one of the following:
power management maximum power backoff value P-MPR;
power backoff value L-MPR caused by exceeding the maximum transmit power limit;
a sum of P-MPR and L-MPR;
a maximum value of P-MPR and L-MPR.

63. The device according to claim 55, wherein the UCI includes: a power backoff value for each PUSCH; wherein the device further includes:
a third determining unit used to, according to a predefined rule, determine a corresponding relationship between each power backoff value carried by the UCI and the target transmission or the first parameter.

64. The device according to claim 55, wherein the UCI includes: a first valid bit and a second valid bit;
the first valid bit is used to indicate a target transmission or a first parameter for power backoff; the second valid bit is used to indicate the power backoff value.

65. The device according to claim 64, wherein the first valid bit indicates the target transmission or first parameter for power backoff by means of joint coding or bit mapping.

66. The device according to claim 64, wherein the payload of the UCI is variable; and the device further includes:
a fourth determining unit used to determine the number of bits of the second valid bit according to the number of target transmissions or first parameters for power backoff indicated by the first valid bit.

67. A processor-readable storage medium, comprising a computer program stored thereon; wherein the computer program is used to cause a processor to execute the method according to any one of claims 1 to 10, or the computer program is used to cause the processor to execute the method according to any one of claims 11 to 22.
